# EUROPÄISCHE PATENTSCHRIFT

(11) **EP 2 164 594 B1**
(45) Veröffentlichungstag und Bekanntmachung des Hinweises auf die Patenterteilung: **17.09.2014**
(21) Anmeldenummer: 08784222.5
(22) Anmeldetag: 25.06.2008
(51) Int. Cl.: B01D 35/143, B01D 36/00

(54) **KRAFTSTOFFFILTER MIT FILTERERKENNUNG**
FUEL FILTER WITH FILTER RECOGNITION
FILTRE À CARBURANT DOTÉ D'UN DÉTECTEUR

(30) Priorität: 26.06.2007 DE 102007029460; 05.07.2007 DE 102007031382
(43) Veröffentlichungstag der Anmeldung: 24.03.2010
(73) Patentinhaber: Hengst SE & Co. KG, 48147 Münster (DE)
(72) Erfinder: MENDEL, Frank, 48317 Drensteinfurt (DE); PRINZ, Norbert, 48268 Greven (DE)
(74) Vertreter: Habbel, Ludwig
(86) Internationale Anmeldenummer: PCT/DE2008/001017
(87) Internationale Veröffentlichungsnummer: WO 2009/000247

(56) Entgegenhaltungen:
- EP-A- 1 154 149
- EP-A- 1 400 271
- FR-A- 2 879 944
- US-A1- 2002 144 938
- US-A1- 2003 121 865

## Beschreibung

Die Erfindung betrifft einen Kraftstofffilter nach dem Oberbegriff des Anspruchs 1.

Aus der Praxis sind Kraftstofffilter bekannt, die einen auswechselbaren Filtereinsatz aufweisen, sowie einen Deckel, mit dem das Filtergehäuse verschließbar ist, so dass bei geöffnetem Deckel ein sogenannter Filterwechsel erfolgen kann, indem der Filtereinsatz ausgewechselt wird. Im unteren Bereich ihres Gehäuses oder in einem hängenden, nach unten gerichteten Deckel weist der Kraftstofffilter einen Wassersammelraum auf. Da das spezifische Gewicht des Wassers größer ist als das des Kraftstoffs, kann aus dem Kraftstoff abgeschiedenes Wasser in diesem Wassersammelraum gesammelt werden.

Die zunehmende Präzision, mit welcher Kraftstoffeinspritz-Anlagen gefertigt sind, macht die verwendeten Bauteile und Leitungsquerschnitte für den Kraftstoff zunehmend empfindlicher gegenüber Verunreinigungen des Kraftstoffs. Besonders gefährlich ist es beispielsweise, wenn bei einem sogenannten Filterwechsel der die Filterfläche aufweisende Filtereinsatz aus dem Kraftstofffilter entfernt wird und anschließend - beispielsweise nach einer Arbeitspause - das Filtergehäuse wieder geschlossen wird, ohne einen unverbrauchten Filtereinsatz einzubauen, oder nach Einsetzen eines nicht vorschriftsmäßigen Filtereinsatzes, der beispielsweise zu kleine Abmessungen aufweist oder eine für die verwendete Kraftstoffsorte ungeeignete Filterfläche aufweist. In solchen Fällen kann ungenügend gefilterter oder gänzlich ungefilterter Kraftstoff zusammen mit Schmutzpartikeln und anderen Verunreinigungen in die hochempfindliche Einspritzanlage gelangen.

Zu den unerwünschten Verunreinigungen des Kraftstoffs gehört auch Wasser, welches sich beispielsweise durch die Temperaturwechsel zwischen Tages- und Nachttemperaturen als Kondensat aus der Luftfeuchtigkeit des in einem Kraftstofftank befindlichen Luftvolumens bildet. Dieser Vorgang kann von dem Betreiber einer den Kraftstoff verbrauchenden Brennkraftmaschine bzw. von dem Wartungspersonal kaum beeinflusst oder vermieden werden. Aus diesem Grund ist in einem gattungsgemäßen Kraftstofffilter als Sicherungsmaßnahme ein Wasserstandssensor vorgesehen. Dieser wird durch zwei elektrische Kontakte gebildet, die voneinander beabstandet sind und erhöht im Wassersammelraum angeordnet sind. Wenn der Wasserpegel im Wassersammelraum über einen definierten Wert angestiegen ist, überbrückt das Wasser die beiden Kontakte, so dass der elektrische Widerstand zwischen den beiden Kontakten deutlich verändert wird, da sich die elektrische Leitfähigkeit des Wassers von der des Kraftstoffs unterscheidet.

Dabei kann der Wert des elektrischen Widerstands als "kurzschlusswert" bezeichnet werden, wenn die beiden Leiter durch im Kraftstofffilter befindliches Wasser elektrisch miteinander verbunden sind, und als sogenannter "Isolationswert" kann der Wert des elektrischen Widerstands bezeichnet werden, wenn die beiden Leiter voneinander getrennt bzw. nur durch den Kraftstoff oder isolierende Materialien miteinander verbunden sind.

Die Veränderung "Isolationswert", der dem Regelbetrieb des Kraftstofffilters entspricht, zum "Kurzschlusswert" bei zu hohem Wasseranteil im Kraftstofffilter wird durch eine elektronische Schaltung ermittelt und ausgewertet, wobei die Schaltung z. B. Teil einer elektronischen Motorsteuerung sein kann. Aus dem Bereich des Automobilbaus ist es bekannt, dass bei einem definiert hohen Wasserstand im Kraftstofffilter ein optisches und / oder akustisches Signal im Wahrnehmungsbereich des Fahrers ausgelöst wird.

Es kann jedoch auch als weitergehende Maßnahme vorgesehen sein, dass bei unzulässig hohem Wasserstand zum Schutz des Verbrennungsmotors beispielsweise das Starten des Motors automatisch unterbunden wird, wenn eine unzulässig große Wassermenge im Kraftstofffilter ermittelt wurde, um auf diese Weise die Einspritzanlage des Motors zu schützen und zu verhindern, dass Wasser auf die Reinseite des Kraftstofffilters und in die Einspritzanlage gelangen kann. Nach Ablassen des Wassers, wenn dementsprechend der durch das Wasser verursachte "Kurzschluss" zwischen den beiden Kontakten des Wasserstandssensors nicht mehr besteht, wertet die elektronische Steuerung diesen nun höheren elektrischen Widerstand aus, so dass beispielsweise nun das Starten des Motors wieder ermöglicht werden kann.

Aus der Praxis ist es bekannt, dass abgesehen von den erwähnten Wasserstandssensoren Temperatursensoren oder Drucksensoren im Kraftstofffilter vorgesehen sein können. Je nach Ausgestaltung des Filters können einer, zwei oder alle drei der erwähnten Sensortypen in einem Kraftstofffilter vorgesehen sein.

Aus der EP 1 154 149 A2 ist ein Filter bekannt, bei welchem ein in diesem Filter vorgesehener Schalter die Betriebsspannung der Kraftstoffpumpe schaltet. Aus der US 2003/0121865 A1 ist eine integrierte Pumpen-/Filter-Anordnung bekannt, bei der ebenfalls erst durch Montage des Filters die elektrische Versorgungsleitung der Kraftstoffpumpe geschlossen wird, nämlich die Masseleitung der Pumpe. Bei diesen beiden Konstruktionen ist nicht auszuschließen, dass sich beim Schaltvorgang innerhalb des Schalters ein Funke bildet. Dies ist innerhalb eines Kraftstoff führenden Systems mit erheblichen Brand- oder Explosionsgefahren verbunden. Sofern auch nur geringe Mengen des Kraftstoffs, insbesondere auch in Form von Kraftstoffdämpfen, in diesen Bereich eindringen, kann nicht ausgeschlossen werden, dass diese durch den Funken gezündet werden. Es ist daher eine aufwändige Konstruktion des jeweiligen Schalters, gegebenenfalls mittels einer zusätzlichen Kapselung, erforderlich.

Aus der FR 2 879 944 A1 ist ein Filter bekannt, der ein biegsames Element und einen damit verbundenen Dehnungsmessstreifen aufweist. Bei zunehmender, im Betrieb des Filters auftretender Verstopfung des Filtereinsatzes biegt sich das biegsame Element immer stärker durch, und der elektrische Widerstand des zugehörigen Dehnungsmessstreifen ändert sich. Zudem ist am Filtereinsatz ein Stift vorgesehen, welcher zwei elektrische Kontakte verbindet, so dass die Anwesenheit des Filtereinsatzes durch einen Stromfluss, und die Abwesenheit des Filtereinsatzes durch eine Unterbrechung des Stromflusses detektiert werden kann, ohne den Filter öffnen zu müssen.

Aus der US 2002 / 0 144 938 A1, die als nächstkommender Stand der Technik angesehen wird, ist ein Filter bekannt, der einen Sensor aufweist, um die Anwesenheit eines auswechselbaren Filtereinsatzes im Filter zur erkennen. Der Filtereinsatz weist eine Komponente auf, die als elektronische Komponente oder Datenkomponente bezeichnet wird. Zur Energieversorgung dieser Komponente dient eine Zuleitung, die kontaktiert wird, wenn der Filtereinsatz in das Filtergehäuse eingesetzt wird.

Der Erfindung liegt die Aufgabe zugrunde, einen gattungsgemäßen Kraftstofffilter dahingehend zu verbessern, sowie ein Verfahren anzugeben, dass der Kraftstofffilter mit möglichst geringem technischem und wirtschaftlichem Aufwand einen verbesserten Schutz des dem Kraftstofffilter zugeordneten Motors ermöglicht.

Diese Aufgabe wird durch einen Kraftstofffilter mit den Merkmalen des Anspruchs 1 gelost, oder durch ein Verfahren zum Wechseln eines Filtereinsatzes nach Anspruch 12, oder durch ein Diagnoseverfahren nach Anspruch 16.

Die Erfindung schlägt mit anderen Worten vor, eine elektrische Schaltung wie z. B. die ohnehin üblicherweise vorgesehene Motorsteuerung zu nutzen, um die An- oder Abwesenheit des Filtereinsatzes im Kraftstofffilter zu detektieren. Hierzu ist ein elektrischer Leiter vorgesehen, dessen elektrische Eigenschaften sich in Abhängigkeit von dieser An- oder Abwesenheit des Filtereinsatzes ändern. Beispielsweise können sich die elektrischen Widerstandswerte ändern, indem der elektrischer Leiter je nach Montagezustand des Filtereinsatzes unterbrochen bzw. geschlossen wird, oder es können sich die elektrischen Kapazitätswerte je nach Montagezustand des Filtereinsatzes ändern.

Dadurch, dass der elektrische Leiter mit der elektrischen Schaltung verbunden ist, kann diese die elektrischen Widerstands- bzw. Kapazitätswerte auswerten und entsprechend einen "in Ordnung"-Schaltzustand oder einen "nicht in Ordnung"-Schaltzustand einnehmen. Der "nicht in Ordnung"-Schaltzustand kann wie vorbeschrieben zu einer dem Personal angezeigten Signalisierung oder zu einer automatischen Stillsetzung des Verbrennungsmotors führen.

Beispielsweise kann ein Schaltkontakt im Kraftstofffilter vorgesehen sein, ähnlich einem Taster bzw. Türkontaktschalter, wobei der Schaltkontakt bei anwesendem Filtereinsatz gedrückt wird und zwei Kontakte des elektrischen Leiters je nach Ausgestaltung des Schaltkontaktes entweder öffnet oder schließt, während bei abwesendem Filtereinsatz der Schaltkontakt seine dementsprechend andere Schaltstellung einnimmt.

Vorschlagsgemäß ist vorgesehen, dass nicht eine elektrische Leitung eigens verlegt werden muss, sondern dass vielmehr ein ohnehin vorgesehener elektrischer Leiter genutzt wird. Dies ist vorschlagsgemäß ein Leiter, der mit einem im Kraftstofffilter vorgesehenen Wasserstandssensor ständig verbunden ist oder zumindest dann verbunden ist, wenn sich der Filtereinsatz innerhalb des Kraftstofffilters befindet.

Bei einem Kraftstofffilter, wie er aus der Praxis bekannt ist und mit einem Wasserstandssensor versehen ist, werden vorschlagsgemäß die beiden elektrischen Leiter, die ohnehin zum Wasserstandssensor gehören, zusätzlich dazu verwendet, die Anwesenheit eines Kraftstofffiltereinsatzes erkennbar zu machen. Auf diese Weise kann der Wasserstandssensor völlig unabhängig von der Überwachung eines Wasserpegels im Kraftstofffilter dazu genutzt werden, anzuzeigen, ob sich der auswechselbare Filtereinsatz, der für diesen Kraftstofffilter vorgesehen ist, tatsächlich im Kraftstofffilter befindet oder nicht. Auch diese Überwachung erfolgt durch Auswertung des elektrischen Widerstandes zwischen den beiden elektrischen Leitern des Wasserstandssensors.

Vorschlagsgemäß ist dazu ein Schaltelement vorgesehen, welches beweglich ist und einerseits eine Kontaktstellung einnehmen kann, in welcher es den beiden elektrischen Leiter anliegt. Andererseits kann das Schaltelement eine Unterbrechungsstellung einnehmen, in welcher diese Verbindung zwischen den beiden elektrischen Leitern des Wasserstandssensors unterbrochen ist, indem das Schaltelement wenigstens einem der beiden Leiter nicht anliegt.

Das vorschlagsgemäß vorgesehene Schaltelement kann als vom übrigen Filter separates Bauteil ausgestaltet sein, beispielsweise in Form eines Plättchens, eines Stiftes oder dergleichen. Dieses separate Bauteil kann beispielsweise von einem Monteur werkseitig bei der Fertigstellung des Kraftstofffilters gehandhabt werden. Nachdem der Filter ordnungsgemäß montiert ist, setzt der Monteur dieses separate Schaltelement in den Kraftstofffilter ein, beispielsweise bevor er das Filtergehäuse mittels eines Deckels verschließt. Durch dieses Einsetzen des separaten Schaltelementes, quasi in Art einer Qualitätskontrolle, bestätigt der Monteur, dass der Filter ordnungsgemäß zusammengebaut und ggf. an benachbarte Komponenten ordnungsgemäß angeschlossen ist.

Wenn beispielsweise die beiden elektrischen Leiter des Wasserstandssensors werkseitig miteinander Kontakt haben, also einen "Kurzschlusswert" bewirken würden, so bewirkt das Einsetzen des Schaltelementes in den Kraftstofffilter eine Trennung dieser beiden Leiter. Als "Trennung" ist dabei im Rahmen des vorliegenden Vorschlags bezeichnet, dass ein elektrischer Widerstand zwischen den beiden Leitern messbar ist, der höher ist als der "Kurzschlusswert". Würde das Schaltelement nicht eingesetzt, so wären die beiden Leiter kurzgeschlossen, vergleichbar einem unzulässig hohen Wasserstand im Wassersammelraum. Dementsprechend würde die elektronische Steuerung unabhängig davon, ob sich tatsächlich Wasser im Kraftstofffilter befindet oder nicht, den elektrischen Widerstand des Wasserstandssensors genauso auswerten wie bei einem unzulässig hohen Wasserstand und auf diese Weise beispielsweise das Starten eines mit dem Kraftstofffilter verbundenen Motors verhindern oder ein Warnsignal auslösen.

Wenn jedoch beispielsweise die beiden elektrischen Leiter des Wasserstandssensors werkseitig voneinander getrennt wären, also einen "Isolationswert" bewirken würden, kann vorgesehen sein, dass das Schaltelement eine elektrische Brücke darstellt, welche die beiden elektrischen Leiter des Wasserstandssensors miteinander verbindet.

Die Ausgestaltung des Schaltelementes als elektrische Brücke kann beispielsweise vorgesehen sein, wenn das Schaltelement beweglich innerhalb des Kraftstofffilters gelagert ist und automatisch eine Kontaktstellung einzunehmen bestrebt ist, beispielsweise schwerkraftbedingt oder federkraftunterstützt in seine Kontaktstellung gedrängt ist. Diese Stellung würde das Schaltelement einnehmen, wenn sich kein Filtereinsatz im Kraftstofffilter befindet. Wenn das Schaltelement als elektrischer Leiter mit guter Leitfähigkeit und vernachlässigbar kleinem elektrischen Widerstand ausgestaltet ist, entspricht diese Stellung der Kurzschluss-Situation bei einem unzulässig hohen Wasserstand im Kraftstofffilter. Erst durch die Montage des Filtereinsatzes wird ein solches Schaltelement gegen die Schwerkraft bzw. gegen die Federkraft aus seiner Kontaktstellung in seine Unterbrechungsstellung bewegt, so dass nun ein Kurzschluss zwischen den beiden elektrischen Leitern des Wasserstandssensors vermieden wird und in der elektronischen Steuerung Signale vorliegen, die den ordnungsgemäßen Betrieb des Kraftstofffilters signalisieren.

Bei Ausgestaltung des Schaltelementes als elektrische Brücke kann vorteilhaft vorgesehen sein, das Schaltelement bewusst nicht als elektrischen Leiter mit guter Leitfähigkeit und vernachlässigbar kleinem elektrischen Widerstand auszugestalten, sondern es vielmehr mit einem definierten elektrischen Widerstand auszugestalten, der sich vom Kurzschlusswert unterscheidet und auch von dem Isolationswert. Ein solcher dritter Wert, den der elektrische Widerstand zwischen den beiden Leitern annehmen kann, wird als "Filtereinsatzwert" bezeichnet. Hierdurch ergibt sich im Vergleich zu der üblichen Auswertung der Sensorsignale des Wasserstandssensors eine zusätzliche Information, die beispielsweise mittels der elektronischen Schaltung, beispielsweise einer Motorsteuerung, automatisch ausgewertet werden kann:

Durch diesen definierten Widerstand können bei entsprechend ausgestalteter elektronischer Steuerung drei unterschiedliche Zustände des Kraftstofffilters automatisch erkannt werden:
a) Erstens kann erkannt werden, ob sich ein unzulässig hoher Wasserpegel im Wassersammelraum des Filters eingestellt hat.
   In diesem Fall liegt nämlich der Kurzschlusswert vor.
b) Zweitens kann erkannt werden, ob sich ein vorschriftsmäßiger Filtereinsatz in dem Kraftstofffilter befindet.
   In diesem Fall liegt nämlich - bei einer Ausgestaltung des Kraftstofffilters gemäß einer ersten Alternative - nach einem Filterwechsel der definierte Widerstandswert als "Filtereinsatzwert" vor, wenn das Schaltelement so ausgestaltet ist, dass es durch das Einsetzen des Filtereinsatzes in seine Kontaktstellung bewegt wird, die beiden Leiter des Wasserstandssensors also mit seinem definierten elektrischen Widerstand überbrückt.
   Oder es liegt in diesem Fall - bei einer Ausgestaltung des Kraftstofffilters gemäß einer zweiten Alternative - nach einem Filterwechsel der Isolationswert vor, wenn nämlich das Schaltelement so ausgestaltet ist, dass es beim Einsetzen des Filtereinsatzes aus seiner Kontaktstellung in seine Unterbrechungsstellung bewegt wird, die beiden Leiter des Wasserstandssensors also nicht mehr überbrückt.
c) Drittens kann erkannt werden, wenn sich kein Filtereinsatz in dem Kraftstofffilter befindet.
   In diesem Fall liegt nämlich gemäß der oben genannten ersten Alternative der Isolationswert vor, weil das Schaltelement so ausgestaltet ist, dass es durch das Einsetzen des Filtereinsatzes in seine Kontaktstellung hätte bewegt werden sollen. Wenn dies nicht erfolgt ist, weil kein Filtereinsatz in den Kraftstofffilter eingesetzt wurde, sind die beiden Leiter des Wasserstandssensors nicht überbrückt.
   Oder es liegt in diesem Fall gemäß der oben genannten zweiten Alternative nach einem Filterwechsel der "Filtereinsatzwert" vor, weil das Schaltelement mit seinem definierten Widerstand sich nach wie vor in seiner Kontaktstellung befindet und nicht durch das Einsetzen des Filtereinsatzes in seine Unterbrechungsstellung bewegt worden ist.

Dabei können vorteilhaft der Kraftstofffilter und das Schaltelement gemäß der oben genannten ersten Alternative so ausgestaltet sein, dass das Schaltelement einen definierten elektrischen Widerstand zwischen den beiden Leitern des Wasserstandssensors schafft, wenn der Filtereinsatz ordnungsgemäß im Kraftstofffilter angeordnet ist. Wenn die beiden Leiter zuvor entweder voneinander getrennt oder miteinander verbunden waren, also der elektrische Widerstand zwischen ihnen den Isolationswert oder den Kurzschlusswert aufwies, werden sie durch das Schaltelement elektrisch miteinander verbunden, und zwar mit einem Widerstandswert, der weder dem Isolationswert noch dem Kurzschlusswert entspricht, sondern als Filtereinsatzwert bezeichnet ist.

Insbesondere, wenn das Schaltelement gemeinsam mit dem Filtereinsatz gehandhabt wird, beispielsweise als Teil des Filtereinsatzes ausgestaltet ist, lassen sich nämlich auf diese Weise unterschiedliche Filtereinsätze anhand entsprechend unterschiedlicher elektrischer Widerstände ihrer Schaltelemente voneinander automatisch unterscheiden. So kann es beispielsweise vorteilhaft vorgesehen sein, eine grundsätzlich gleiche Konstruktion des Kraftstofffilters in möglichst wirtschaftlicher Verwendungsweise für mehrere unterschiedliche Fahrzeugtypen bzw. Motortypen bzw. Kraftstofftypen zu verwenden:
Beispielsweise kann vorgesehen sein, den grundsätzlich gleich aufgebauten Kraftstofffilter entweder für Benzinmotoren oder für Dieselmotoren zu verwenden. Oder es kann vorgesehen sein, den Kraftstofffilter für die Verwendung von entweder Mineralkraftstoff oder von Biodiesel aus pflanzlichen Rohstoffen vorzusehen. Oder es kann vorgesehen sein, den Kraftstofffilter in Fahrzeuge einzubauen, die in unterschiedliche geografische Regionen mit unterschiedlichen Kraftstoffqualitäten ausgeliefert werden sollen.

Bei grundsätzlich gleich ausgestaltetem Kraftstofffilter kann daher vorgesehen sein, lediglich andere Filtereinsätze zu verwenden, beispielsweise Filtereinsätze, bei denen die Filterfläche durch unterschiedliche Materialien mit unterschiedlicher Filterfeinheit oder unterschiedlicher Beständigkeit gegen bestimmte Stoffe gebildet wird. Die elektronische Steuerung des jeweiligen Motors ist werkseitig je nach dem vorgesehenen Einsatzgebiet oder der vorgesehenen Ausgestaltung des Motors auf einen bestimmten Filtertyp eingestellt worden, also auf einen bestimmten der mehreren unterschiedlichen Filtereinsätze, so dass das Schaltelement im Kraftstofffilter einen vorgegebenen elektrischen Widerstand aufweisen muss, um einen ordnungsgemäßen Betrieb des Motors zu ermöglichen.

Wird ein nicht vorschriftsmäßiger elektrischer Widerstand ermittelt, so kann vorgesehen sein, dass die Motorsteuerung entweder den Start des Motors verhindert, oder es können kürzere Wartungsintervalle vorgesehen sein, so dass entsprechende Hinweise, die dem Betreiber des Motors angezeigt werden, nach einer entsprechend kürzeren als der regulär vorgesehenen Betriebsdauer angezeigt werden, oder es können dem Betreiber des Motors auch das Fehlen des Filtereinsatzes oder das Vorhandensein eines falschen, nicht vorschriftsmäßigen Filtereinsatzes angezeigt werden.

Dementsprechend ist ein vorschlagsgemäßes Verfahren zum Auswechseln eines Filtereinsatzes bei einem Kraftstofffilter dadurch gekennzeichnet, dass gleichzeitig mit der Montage bzw. mit dem Entfernen eines Filtereinsatzes der elektrische Widerstand zwischen den beiden elektrischen Leitern des Wasserstandssensors verändert wird.

Für einen Wasserstandssensor mit zwei sich berührenden Leitern bedeutet dies, dass mit der Entnahme des Filtereinsatzes auch ein Schaltelement aus dem Kraftstofffilter entfernt wird, welches bislang die beiden Leiter voneinander trennte, so dass nun die beiden elektrischen Leiter einander kontaktieren und denselben elektrischen Kurzschlusswert des Sensors ergeben, als wenn die beiden Elektroden des Wasserstandssensors durch Wasser überbrückt würden.

Für die herkömmliche Ausgestaltung eines Wasserstandssensors, dessen beiden elektrische Leiter voneinander getrennt geführt sind, kann bei dem vorschlagsgemäßen Verfahren zum Wechseln eines Filtereinsatzes vorgesehen sein, dass das Schaltelement in seine Kontaktstellung bewegt wird, wenn der Filtereinsatz aus dem Kraftstofffilter entnommen wird, so dass nun die beiden elektrischen Leiter des Wasserstandssensors überbrückt werden.

Würde kein neuer Filtereinsatz in den Kraftstofffilter eingesetzt, so würde in den beiden vorbeschriebenen Fällen nach den Wartungsarbeiten derselbe elektrische Widerstand zwischen den beiden Leitern des Wasserstandssensors herrschen, wie wenn die beiden Elektroden des Wasserstandssensors durch im Kraftstofffilter stehendes Wasser überbrückt würden, nämlich der Kurzschlusswert. Die zugeordnete elektronische Steuerung, wie z. B. eine Motorsteuerung, würde demzufolge automatisch genauso reagieren wie auf zuviel Wasser im Kraftstofffilter. Somit wird vorschlagsgemäß ein Verfahren zum Wechseln eines Filtereinsatzes angegeben, welches bei gleicher Handhabung des Filtereinsatzes, also ohne Mehrarbeit während der Wartungsarbeiten, die Sicherheit für das Betreiben des Filters und die Sicherheit für die durch den Filter zu schützende technische Einrichtung, wie einen Verbrennungsmotor, verbessert.

Auch ein Diagnoseverfahren zur Überprüfung eines Kraftstofffilters ist vorschlagsgemäß dadurch gekennzeichnet, dass der elektrische Widerstand zwischen den beiden elektrischen Leitern des Wasserstandssensors in Abhängigkeit davon verändert wird, ob ein Filtereinsatz im Kraftstofffilter angeordnet ist oder nicht. Auf diese Weise kann mit sehr geringen Änderungen an bestehenden Systemen - sowohl was die Kraftstofffilter als auch was die elektronischen Schaltungen angeht, die die Signale des Wasserstandssensors auswerten - eine zusätzliche Information gewonnen werden und die Betriebssicherheit des Kraftstofffilters sowie des ihm zugeordneten, den Kraftstoff verbrauchenden Aggregats verbessert werden.

In besonders vorteilhafter Ausgestaltung kann beim Diagnoseverfahren vorgesehen sein, dass - wie oben erwähnt - nicht nur zwei Schaltzustände berücksichtigt werden sondern drei, beispielsweise
■ erstens "Kurzschluss" mit sehr geringem oder keinem elektrischen Widerstand zwischen den beiden elektrischen Leitern des Wasserstandssensors. Je nach konstruktiver Ausgestaltung des Kraftstofffilters kann dieser Widerstandswert beispielsweise durch einen zu hohen Wasserstand im Kraftstofffilter oder bei fehlendem Filtereinsatz vorliegen,
■ zweitens ein "korrekter Widerstand" in Abhängigkeit von dem vorgegebenen elektrischen Widerstand. Je nach konstruktiver Ausgestaltung des Kraftstofffilters kann dieser "korrekte Widerstand" der Widerstandswert sein, den das Schaltelement aufweist, beispielsweise in Form des "Filtereinsatzwertes" bei Anwesenheit des vorschriftsmäßigen Filtereinsatzes im Kraftstofffilter,
   wobei dieser "korrekte Widerstand" alternativ jedoch auch der "Isolationswert" sein kann, wenn beispielsweise der im Kraftstofffilter montierte Filtereinsatz die beiden Leiter lediglich trennt, jedoch nicht seinerseits eine elektrische Verbindung zwischen ihnen schafft,
■ und drittens ein Schaltzustand "nicht korrekter Filtereinsatz", wenn nämlich ein elektrischer Widerstand des Schaltelementes ermittelt wird, der nicht dem Kurzschlusswert entspricht, aber auch nicht einem vorschriftsmäßigen elektrischen Widerstand des Schaltelementes, so dass dieser "nicht korrekte" Widerstandswert signalisiert, dass ein falscher, nicht für diesen Motor vorgesehener Filtereinsatz montiert ist.

Das vorerwähnte Schaltelement kann am Filtereinsatz selbst verwirklicht sein. Der Filtereinsatz kann herkömmlich aufgebaut sein, also in an sich bekannter Weise ein Filtermedium wie z. B. ein Papierfaltentfilterelement aufweisen, und mechanisch stabilere Bestandteile z. B. aus Kunststoff aufweisen, wie z. B. einen Rahmen, oder eine obere und eine untere Endscheibe, oder einen sogenannten Innendom in Form eines rohrähnlichen Bauteils, welches das zirkumferent darum angeordnete Filtermedium gegen die im Filterbetrieb herrschenden Kräfte abstützt. In solchen Fällen kann vorteilhaft das Schaltelement an den mechanisch stabileren Bauteilen des Filtereinsatzes vorgesehen sein, beispielsweise an einer Endscheibe oder dem Innendom.

Das Schaltelement kann jedoch auch als separates Bauteil ausgestaltet sein. Dieses kann beispielsweise vom Monteur als einzelnes Bauteil in den Kraftstofffilter eingesetzt werden, wie anhand des weiter oben erwähnten Plättchens oder Stiftes beschrieben. Alternativ kann vorgesehen sein, ein solches separates Bauteil, auch als "Adapter" bezeichnet, an einem Filtereinsatz anzubringen, so dass anschließend bei Montage des Filtereinsatzes automatisch auch der Adapter, der das Schaltelement aufweist, in den Kraftstofffilter eingesetzt wird. Auf diese Weise kann das Schaltelement vom Monteur außerhalb des Kraftstofffilters, beispielsweise außerhalb eines bei Kraftfahrzeugen beengten Motorraumes problemlos mit dem Filtereinsatz verbunden werden und anschließend kann der Filtereinsatz in an sich bekannter Weise in den Kraftstofffilter eingesetzt werden, so dass die Handhabung des Schaltelementes für den Monteur den Filterwechsel nicht unnötig verkompliziert.

Ausführungsbeispiele der Erfindung werden anhand der rein schematischen Darstellungen nachfolgend näher erläutert. Dabei zeigt
- Fig. 1: einen Schnitt quer durch einen Filtereinsatz samt Wasserstandssensor eines ersten Ausführungsbeispiels, wobei andere Bauteile des den Filtereinsatz aufweisenden Kraftstofffilters aus Übersichtlichkeitsgründen nicht dargestellt sind;
- Fig. 2: den Wasserstandssensor in gegenüber Fig. 1 vergrößerter Darstellung,
- Fig. 3 bis 5: ein Schaltelement der Anordnung von Fig. 1 in gegenüber Fig. 1 vergrößertem Maßstab und aus drei unterschiedlichen Ansichten,
- Fig. 6 und 7: einen teilweise weggebrochenen Schnitt ähnlich Fig. 1, jedoch bei einem zweiten Ausführungsbeispiel, die
- Fig. 8 und 9: Ansichten ähnlich Fig. 6 und 7, jedoch bei einem dritten Ausführungsbeispiel,
- Fig. 10: eine Ansicht ähnlich Fig. 1, jedoch bei einem vierten Ausführungsbeispiel, und die
- Fig. 11 bis 20: Längsschnitte durch vier weitere Ausführungsbeispiele von Filtern, jeweils in einer Darstellung mit und ohne im Filter vorhandenen Filtereinsatz.

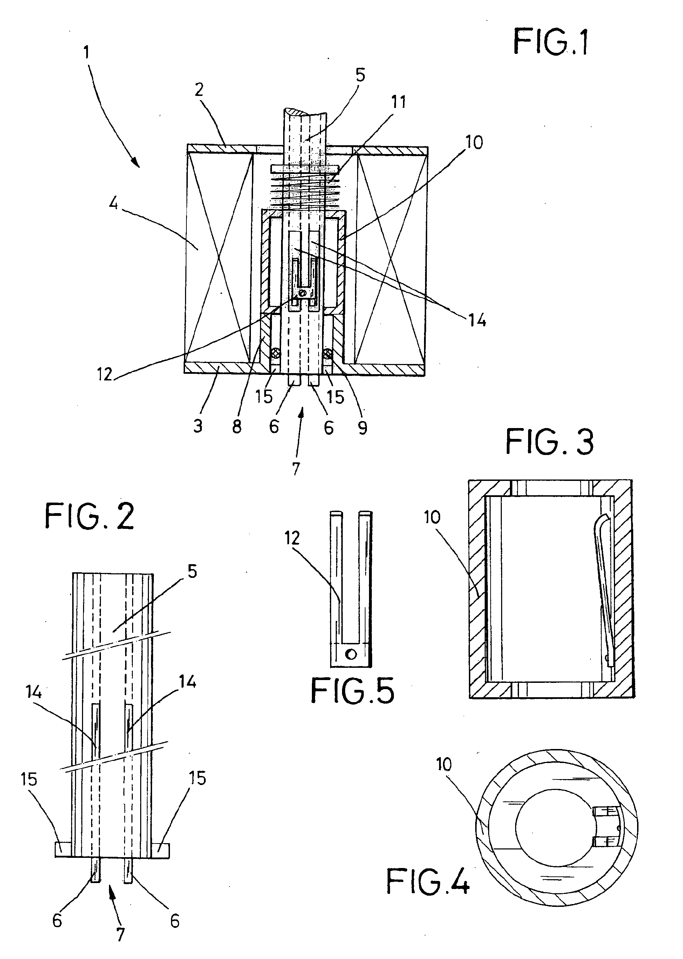

Fig. 1 zeigt einen Filtereinsatz 1, der in an sich bekannter Weise im Wesentlichen zylindrisch ausgestaltet ist und eine obere Endscheibe 2 sowie eine untere Endscheibe 3 aufweist, wobei diese beiden Endscheiben 2 und 3 aus Kunststoff bestehen. Dazwischen weist der Filtereinsatz 1 eine als Filtermedium 4 bezeichnete Filterfläche auf, die in an sich bekannter Weise z. B. als Faltenfilter aus einem Papierwerkstoff oder aus einem synthetischen Material ausgestaltet sein kann.

Der Filtereinsatz wird bei dem dargestellten Ausführungsbeispiel in einem hängend angeordneten Kraftstofffilter verwendet, d. h. in einem Kraftstofffilter, dessen Deckel nicht am oberen, sondern am unteren Ende des Filtergehäuses angeordnet ist. Der Filtereinsatz 1 wird demzufolge von unten nach oben in das Filtergehäuse eingesetzt und dabei auf einen Stutzen 5 aufgeschoben, der an seinem unteren Ende zwei Elektroden 6 aufweist, die Teil eines insgesamt mit 7 bezeichneten Wasserstandssensors sind.

Der Filtereinsatz 1 weist an seiner unteren Endscheibe 3 radial innen einen umlaufenden, aufwärts weisenden Kragen 8 auf, der mittels eines Dichtringes 9 gegenüber dem Stutzen 5 abgedichtet ist. Der Kragen 8 ist so ausgestaltet, dass er beim Einsetzen des Filtereinsatzes 1 in den Kraftstofffilter von unten gegen eine Schiebehülse 10 gerät. Die Schiebehülse 10 umgibt den Stutzen 5 und ist auf diesem längsbeweglich gelagert. Bei der weiteren Aufwärtsbewegung, wenn der Filtereinsatz 1 in den Kraftstofffilter eingesetzt wird, wird die Schiebehülse 10 folglich auf dem Stutzen 5 nach oben verschoben.

Die Schiebehülse 10 wird durch eine Wendelfeder 11 nach unten gedrückt, nimmt also automatisch eine Stellung ein, die tiefer als in Fig. 1 dargestellt ist, wenn sich kein Filtereinsatz 1 in dem Kraftstofffilter befindet. Die Schiebehülse 10 wird beim Einsetzen des Filtereinsatzes 1 gegen die Wirkung der Wendelfeder 11 auf dem Stutzen 5 nach oben in die aus Fig. 1 dargestellte Stellung verschoben, wie vorstehend beschrieben.

Auch die Schwerkraft unterstützt, dass die Schiebehülse 10 automatisch die erwähnte tiefere Stellung einnimmt, wenn sich kein Filtereinsatz 1 in dem Kraftstofffilter befindet. Abweichend von dem dargestellten Ausführungsbeispiel kann gegebenenfalls vorgesehen sein, dass allein diese Krafteinwirkung der Schwerkraft genutzt wird. Vorteilhaft wird bei dem dargestellten Ausführungsbeispiel bewirkt, dass die Krafteinwirkung der Wendelfeder 11 besonders zuverlässig die gewünschte Bewegung der Schiebehülse 10 sicherstellt. Zudem kann diese Anordnung, also mit der Wendelfeder 11, auch bei einer Anordnung des Filtereinsatzes 1 verwendet werden, bei welcher der Filtereinsatz 1 von oben in den Kraftstofffilter eingesetzt wird und demzufolge die Schiebehülse 10 angehoben werden soll, wenn sich kein Filtereinsatz 1 in dem Kraftstofffilter befindet.

Die Schiebehülse 10 weist in ihrem Inneren eine U-förmige Federzunge 12 auf, die dem Stutzen 5 anliegt und auf die weiter unten noch näher eingegangen wird. Die Federzunge 12, bzw. die Federzunge 12 in Verbindung mit der Schiebehülse 10, stellt ein Schaltelement dar. Dieses Schaltelement nutzt zwei elektrische Leiter 14 des ohnehin vorgesehenen Wasserstandssensors 7, um die Anwesenheit des Filtereinsatzes 1 im Flüssigkeitsfilter detektieren zu können, wie nachfolgend näher erläutert wird:

Fig. 2 zeigt den Stutzen 5 ohne den ihn umgebenden Filtereinsatz 1 und in nicht maßstabsgerecht denselben Proportionen wie in der Fig. 1. Der Stutzen 5 besteht aus einem elektrisch isolierenden Material wie z. B. einem geeigneten, gegen Kraftstoff beständigen Kunststoff. In den Stutzen 5 sind zwei elektrische Leiter 14 eingegossen. Gestrichelt ist eingezeichnet, wo die Leiter 14 jeweils zirkumferent vom Material des Stutzens 5 umgeben sind, also ringsum isoliert sind. Auf einem bestimmten Abschnitt des Stutzens 5 hingegen treten die Leiter an die Oberfläche des Stutzens 5, wobei sie voneinander beabstandet und somit elektrisch getrennt sind. Diese beiden Abschnitte der Leiter 14 sind in Fig. 2 mit durchgezogenen Linien dargestellt. Mit ihren beiden unteren Enden bilden die Leiter 14 dort, wo sie aus dem unteren Ende des Stutzens 5 ragen, die beiden Elektroden 6 des Wasserstandssensors 7. Abweichend von diesem Ausführungsbeispiel können die Elektroden 6 aus einem anderen Material bestehen als die Leiter 14, beispielsweise aus einem besonders oxidationsresistenten Material.

An seinem unteren Ende weist der Stutzen 5 einen Anschlag 15 auf. Dieser kann in Form von mehreren zirkumferent verteilten Vorsprüngen ausgestaltet sein oder als durchgängiger, umlaufender Kragen. Der Anschlag 15 wirkt mit der Schiebehülse 10 derart zusammen, dass er deren nach unten gerichtete Bewegung begrenzt. Unter der Krafteinwirkung der Wendelfeder 11 und der Schwerkraft bewegt sich daher die Schiebehülse 10 nur so weit abwärts, bis sie dem Anschlag 15 anliegt.

Die Fig. 3 bis 5 zeigen die Schiebehülse 10 und die darin angeordnete Federzunge 12: Die Schiebehülse 10 ist so bemessen, dass sie auf den Stutzen 5 aufgeschoben werden kann, beispielsweise von oben, bevor der Stutzen 5 seinerseits im Gehäuse des Kraftstofffilters montiert wird. Durch die gewählte Geometrie des Stutzens 5 und der Schiebehülse 10 kann konstruktiv sichergestellt sein, dass die Schiebehülse 10 nur in einer bestimmten Drehwinkelstellung auf den Stutzen 5 aufgesetzt werden kann, beispielsweise durch einen Vorsprung am einen Bauteil und eine Nut am anderen Bauteil, oder durch eine grundsätzlich nicht kreisrunde Kontur von Stutzen 5 und Schiebehülse 10, so dass jedenfalls die Schiebehülse 10 nur in einer einzigen Drehwinkelstellung auf dem Stutzen 5 montiert werden kann.

Die Schiebehülse 10 nimmt in ihrem Inneren die Federzunge 12 auf. Fig. 5 zeigt, dass die Federzunge 12 U-förmig gestaltet ist und zwei längere, parallele Schenkel aufweist sowie einen kürzeren Querriegel, der die beiden Schenkel verbindet. Wie Fig. 3 zeigt, ist die Federzunge 12 mit ihrem Querriegel an der Wandung der Schiebehülse 10 festgelegt, während sich die beiden Schenkel der Federzunge 12 in das Innere der Schiebehülse 10 und von deren Wandung weg erstrecken. Die Schiebehülse 10 kann beispielsweise aus Kunststoff bestehen und als Spritzgussteil ausgestaltet sein, während die Federzunge 12 elektrisch leitend ausgestaltet ist, beispielsweise aus Metall besteht.

Ein Stift, der an der Wandung der Schiebehülse 10 nach innen ragt, kann zusammenwirkend mit einer Bohrung im Querriegel der Federzunge 12 dazu dienen, dass die Federzunge 12 mit der Schiebehülse 10 verstemmt wird, der Stift der Schiebehülse also aufgeschmolzen wird.

Eine alternative Befestigung durch Verschraubung, Vernietung oder dergleichen ist jedoch gleichfalls möglich, um die Federzunge 12 in der Schiebehülse 10 wie aus den Fig. 3 bis 5 ersichtlich festzulegen. Abweichend von dem dargestellten Ausführungsbeispiel kann vorgesehen sein, die Federzunge 12 in die Gießform der Schiebehülse 10 einzulegen und bei der Herstellung der Schiebehülse 10 mit deren Werkstoff zu umspritzen, so dass keine zusätzlichen Befestigungsmittel erforderlich sind.

Die Schiebehülse 10 wird auf dem Stutzen 5 hinsichtlich ihrer Drehwinkelstellung so ausgerichtet, dass die beiden Schenkel der Federzunge 12 den beiden elektrischen Leitern 14 anliegen, wenn sich die Schiebehülse 10 auf dem entsprechenden Abschnitt des Stutzens 5 befindet.

Bei dem dargestellten Ausführungsbeispiel ist vorgesehen, dass die Schiebehülse 10 durch die Wendelfeder 11 nach unten und gegen den Anschlag 15 gedrückt wird. Da im unteren Bereich des Stutzens 5 die Leiter 14 im Inneren des Stutzens 5 verlaufen, liegen die Schenkel der Federzunge 12 den Leitern 14 nicht an, so dass die Leiter 14 nicht mittels der Federzunge 12 überbrückt werden. Das Schaltelement, welches durch die Federzunge 12 oder durch die Schiebehülse 10 mitsamt der Federzunge 12 gebildet wird, nimmt also seine Unterbrechungsstellung ein, wenn sich kein Filtereinsatz 1 im Kraftstofffilter befindet.

Demgegenüber nimmt das Schaltelement seine Kontaktstellung ein, wenn der Filtereinsatz 1 gemäß Fig. 1 im Kraftstofffilter montiert ist. Durch Montage des Filtereinsatzes 1 wird die Schiebehülse 10 angehoben und die beiden Schenkel der Federzunge 12 geraten in den Bereich des Stutzens 5, in welchem die beiden elektrischen Leiter 14 an der Oberfläche des Stutzens 5 verlaufen, so dass die Federzunge 12 die elektrischen Leiter 14 elektrisch leitend überbrückt.

Die Federzunge 12 ist aus einem elektrisch leitenden, beispielsweise metallischen Werkstoff gefertigt, weist allerdings einen definierten elektrischen Widerstand auf. In ihrer Kontaktstellung verbindet sie daher die beiden elektrischen Leiter 14 mit einem Widerstand, der durch die elektronische Schaltung ausgewertet werden kann, welche auch die Signale des Wasserstandssensors 7 auswertet. So kann automatisch anhand des ermittelten elektrischen Widerstandes diagnostiziert werden,
■ ob sich der Kraftstofffilter in einem Betriebszustand befindet, der als "in Ordnung" bezeichnet werden kann, wenn sich nämlich ein Filtereinsatz 1 im Kraftstofffilter befindet und sich kein oder nur wenig Wasser im Kraftstofffilter befindet - denn dann ist zwischen den beiden elektrischen Leitern 14 der definierte elektrische Widerstand des Schaltelementes messbar,
■ oder ob sich der Kraftstofffilter in einem Betriebszustand befindet, der als "nicht in Ordnung" bezeichnet werden kann, weil sich nämlich zu viel Wasser im Kraftstofffilter befindet - denn dann ist zwischen den beiden elektrischen Leitern 14 der "Kurzschlusswert" des elektrischen Widerstandes messbar, da der elektrische Strom nicht durch den vergleichsweise höheren elektrischen Widerstand des Schaltelementes fließen wird,
■ oder ob sich der Kraftstofffilter in einem Betriebszustand befindet, der ebenfalls als "nicht in Ordnung" bezeichnet werden kann, weil sich nämlich kein Filtereinsatz 1 im Kraftstofffilter befindet - denn dann ist zwischen den beiden elektrischen Leitern 14 der "Isolationswert" des elektrischen Widerstandes messbar, da die beiden elektrischen Leiter 14 weder durch das Schaltelement noch durch das Wasser überbrückt sind.

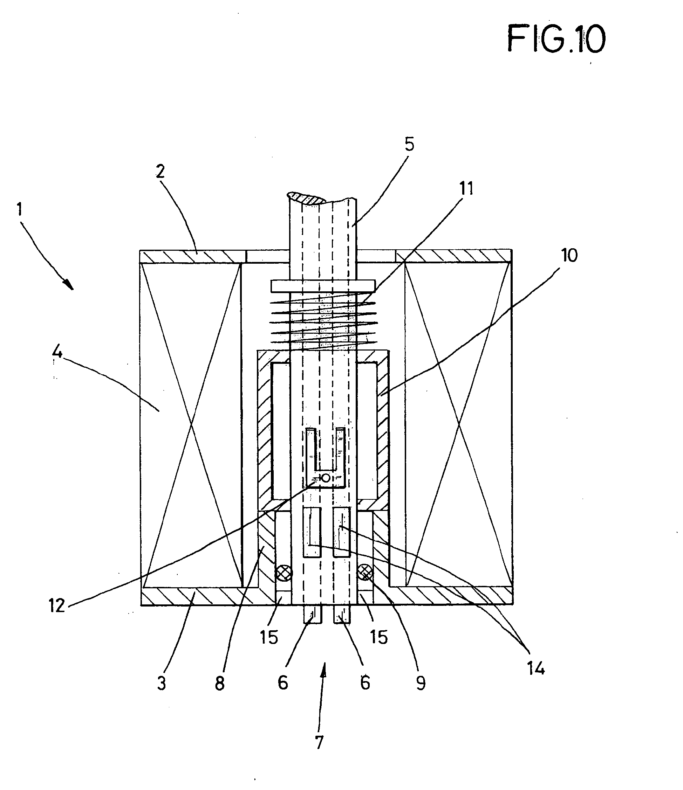

Bei einer von dem Ausführungsbeispiel der Fig. 1 abweichenden Ausgestaltung kann gemäß dem Ausführungsbeispiel der Fig. 10 vorgesehen sein, dass im unteren Bereich des Stutzens 5 die Leiter 14 an der Oberfläche des Stutzens 5 verlaufen. In diesem Fall liegen die Schenkel der Federzunge 12 den Leitern 14 an, wenn der Filtereinsatz 1 aus dem Kraftstofffilter entfernt worden ist und die Schiebehülse durch die Wendelfeder 11 auf das untere Ende des Stutzens 5 und gegen den Anschlag 15 gedrückt worden ist.

Auch die Federzunge 12 ist von dem Ausführungsbeispiel der Fig. 1 abweichend ausgestaltet und weist nicht einen definierten Widerstand bestimmter, mittlerer Größe auf, sondern sie weist bei dem Ausführungsbeispiel der Fig. 10 eine optimale elektrische Leitfähigkeit mit einem sehr geringen Widerstand auf. Wenn die Federzunge 12 sich in der erwähnten Kontaktstellung befindet, wird demzufolge mittels des Schaltelements zwischen den beiden elektrischen Leitern 14 ein Kurzschluss erzeugt, der vergleichbar ist mit einem Wasserspiegel innerhalb des Kraftstofffilters, der die beiden Elektroden 6 des Wasserstandssensors 7 miteinander verbinden würde.

Wenn der Filtereinsatz 1 aus dem Kraftstofffilter entfernt ist, wird daher durch die elektrische Schaltung derselbe Schaltzustand eingenommen wie bei einem unzulässig hohen Wasserpegel im Kraftstofffilter, so dass beispielsweise ein Warnsignal ausgelöst oder der Start des Motors verhindert würde. Bei montiertem Filtereinsatz 1 hingegen wird bei dem Ausführungsbeispiel der Fig. 10 die Schiebehülse 10 angehoben und in die Unterbrechungsstellung des Schaltelements verschoben, in welcher nämlich die beiden elektrischen Leiter 14 nicht durch die Federzunge 12 miteinander verbunden sind, da die Schenkel der Federzunge 12 dem elektrisch nicht leitenden Werkstoff des Stutzens 5 außen anliegen.

Im Rahmen einer weiteren, nicht dargestellten Abwandlung dieser grundsätzlichen Ausführungsform der Figuren 1 und 10 kann bei einem Ausführungsbeispiel, welches ansonsten dem der Fig. 10 entspricht, vorgesehen sein, dass die Federzunge 12 keine optimale elektrische Leitfähigkeit mit sehr geringem elektrischem Widerstand aufweist, sondern einen definierten Widerstand mittlerer Größe. Somit wird zwar eine elektrische Verbindung, jedoch kein Kurzschluss zwischen den beiden elektrischen Leitern 14 erzeugt, wenn der Filtereinsatz 1 aus dem Kraftstofffilter entfernt worden ist und die Schiebehülse 10 durch die Wendelfeder 11 auf das untere Ende des Stutzens 5 und gegen den Anschlag 15 gedrückt worden ist und die beiden elektrischen Leiter 14 miteinander verbindet. Mittels einer entsprechenden Schaltung wie z. B. der Motorsteuerung könnten daher anhand der unterschiedlichen elektrischen Widerstände unterschiedliche Betriebszustände des Kraftstofffilters detektiert werden:
■ z. B. "Filtereinsatz verbaut" - bei einem hohen elektrischen Widerstand, wenn die Federzunge 12 von den beiden elektrischen Leitern 14 getrennt ist und dem elektrisch isolierenden Material des Stutzens 5 anliegt; oder
■ "Wasserstand unzulässig hoch" - bei einem geringen elektrischen Widerstand bzw. Kurzschluss, wenn die Elektroden 6 des Wasserstandssensors 7 bei unzulässig hohem Wasserpegel durch das Wasser miteinander kurzgeschlossen sind; oder
■ "Filtereinsatz fehlt" - bei einem mittleren elektrischen Widerstand, wenn die Federzunge 12 den beiden elektrischen Leitern 14 anliegt und diese mit dem definierten Widerstand der Federzunge 12 elektrisch verbindet.

Grundsätzlich kann vorgesehen sein, die Schiebehülse 10 und die Wendelfeder 11 wie in den Fig. 1 bis 5 dargestellt filterfest vorzusehen. Beispielsweise können diese Bauteile gemäß dem dargestellten Ausführungsbeispiel an dem Stutzen 5 gehalten sein, oder sie können an einem Stützdom gehalten sein, der im Innenraum des Kraftstofffilters vorgesehen ist und der das Filtermedium 4 gegen Kollabieren unter den im Betrieb des Kraftstofffilters herrschenden Temperaturen und Drücken schützt.

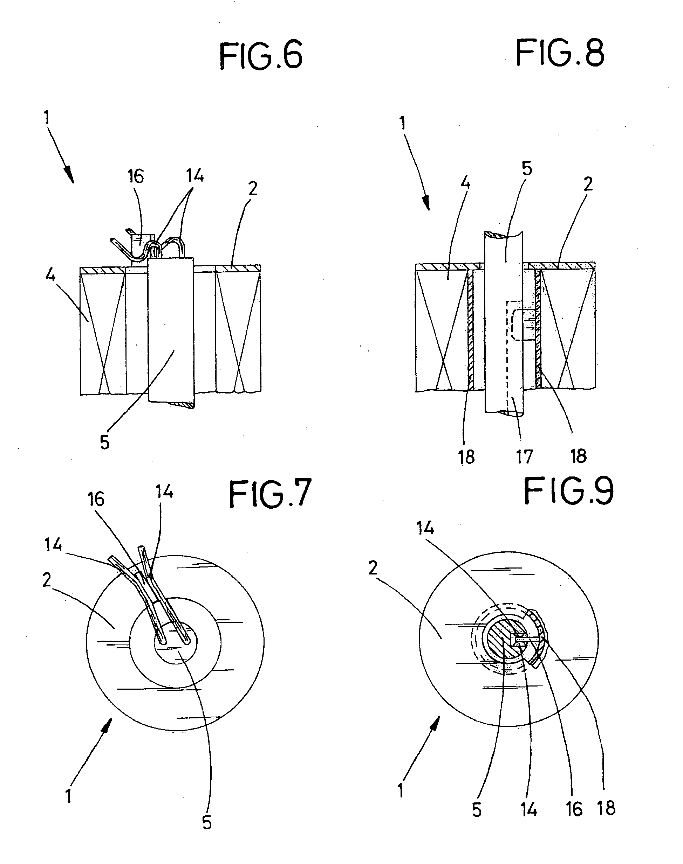

Alternativ dazu kann das Schaltelement an dem auswechselbaren Filtereinsatz vorgesehen sein. Auf diese Weise kann eine für unterschiedliche Filtereinsätze typische Kennzeichnung mittels entsprechend unterschiedlicher elektrischer Widerstände ermöglicht werden, welche die jeweiligen Schaltelemente aufweisen. Die Fig. 6 bis 9 zeigen stark vereinfacht derartige Ausführungsbeispiele:
Fig. 6 zeigt einen Filtereinsatz 1, der zu einer oberen Endscheibe 2 eine Flosse 16 trägt, die nach oben gerichtet ist. Die beiden elektrischen Leiter 14, die von den unteren Elektroden 6 durch den Stutzen 5 verlaufen, sind in Form zweier Federbügel ausgestaltet, die durch ihre Form und durch ihre Federelastizität aneinander anliegen, wenn der Filtereinsatz 1 nicht im Kraftstofffilter montiert ist. Fig. 6 stellt als rein schematische Zeichnung nicht dar, wie der Stutzen 5 an seinem oberen Ende im Gehäuse des Kraftstofffilters gehalten ist, und Fig. 6 zeigt weiterhin nicht im Detail, wie der Verlauf der beiden elektrischen Leiter 14 konkret im Übergangsbereich vom Stutzen 5 zum Gehäuse des Kraftstofffilters erfolgt. Es soll lediglich schematisch verdeutlicht werden, dass durch das Einsetzen des Filtereinsatzes 1 in den Kraftstofffilter die Flosse 16 als Trennelement zwischen die beiden elektrischen Leiter 14 geführt wird. Ohne Filtereinsatz 1 wird daher der Kurzschlusswert des elektrischen Widerstandes zwischen den beiden Leitern 14 erzielt, so dass die elektronische Schaltung den selben Schaltzustand einnimmt wie bei einem unzulässig hohen Wasserstand im Kraftstofffilter.

Das Ausführungsbeispiel der Fig. 6 ist in Fig. 7 in einer Ansicht von oben dargestellt: Der Blick auf die obere Endscheibe 2 des Filtereinsatzes 1 zeigt die Flosse 16, die sich zwischen den beiden federbügelartigen elektrischen Leitern 14 befindet und diese voneinander trennt.
Die Flosse 16 kann aus Kunststoff bestehen und beispielsweise einteilig gemeinsam mit der oberen Endscheibe 2 im Spritzgussverfahren hergestellt sein. Bei entsprechend gewähltem Kunststoff isoliert daher die Flosse 16 die beiden elektrischen Leiter 14 voneinander.

Es kann jedoch auch vorgesehen sein, die Flosse 16 aus einem anderen Werkstoff zu fertigen, der keine isolierenden Eigenschaften aufweist, aber einen im Vergleich zum Kurzschlusswert deutlich höheren elektrischen Widerstand aufweist, so dass der elektrische Widerstand zwischen den beiden Leitern 14 einen "Filtereinsatzwert" annimmt, wenn der Filtereinsatz 1 in den Kraftstofffilter eingesetzt ist.

An Stelle eines speziellen Materials für die Flosse 16 kann auch vorgesehen sein, die Flosse 16 aus isolierendem Werkstoff herzustellen, auf beiden Seiten der Flosse 16 elektrisch leitfähige Oberflächen in Form von elektrischen Kontakten vorzusehen und diese Kontakte mit einem definierten elektrischen Widerstand miteinander zu verbinden, so dass auch in diesem Fall die Flosse 16 zwar als Trennelement wirkt, aber die beiden elektrischen Leiter 14 nicht voneinander isoliert, sondern vielmehr mittels eines definierten elektrischen Widerstandes voneinander trennt, so dass auch in diesem Fall der elektrische Widerstand einen "Filtereinsatzwert" annimmt, wenn sich der Filtereinsatz 1 im Kraftstofffilter befindet.

Eine alternative Anbringungsmöglichkeit für eine Flosse 16 zeigt das Ausführungsbeispiel der Fig. 8 und 9. Hierbei ist im Stutzen 5 eine Nut 17 versehen, die am unteren Ende des Stutzens 5 mündet. Die Flosse 16 ist im Inneren des Filtereinsatzes 1 vorgesehen, wobei bei diesem Ausführungsbeispiel der Filtereinsatz 1 einen Innendom 18 aufweist, also einen rohrförmigen flüssigkeitsdurchlässigen Stützkörper für das Filtermedium 4, der im Unterschied zu einem filterfesten Stützdom einen Teil des Filtereinsatzes 1 darstellt und gemeinsam mit dem Filtereinsatz 1 ausgewechselt wird. Die beiden elektrischen Leiter 14 treten in einer vorbestimmten Höhe des Stutzens 5 in das Innere der Nut 17, liegen dort also frei. Sie sind bei dem Ausführungsbeispiel der Fig. 8 und 9 als Federbügel ausgestaltet, die aneinander anliegen und beim Einsetzen des Filtereinsatzes 1 durch die Flosse 16 voneinander getrennt werden, ähnlich wie dies anhand des Ausführungsbeispiels der Fig. 6 und 7 beschrieben ist.

Wenn sich die beiden elektrischen Leiter 14 bei den Ausführungsbeispielen der Fig. 6 - 9 nicht berühren, sondern voneinander beabstandet sind, so lange der Filtereinsatz 1 nicht in den Kraftstofffilter eingesetzt ist, ist eine differenzierte Diagnose der Zustände des Kraftstofffilters möglich: Bei nicht eingesetztem Filtereinsatz sind die beiden elektrischen Leiter 14, da sie sich nicht berühren, gegeneinander isoliert und es ist aufgrund des Isolationswertes des elektrischen Widerstandes messbar und diagnostizierbar, dass kein Filtereinsatz im Kraftstofffilter befindlich ist. Wird jedoch der Filtereinsatz in den Kraftstofffilter eingesetzt, so bewirkt der definierte elektrische Widerstand im Bereich der Flosse 16, dass die beiden durch die Flosse 16 miteinander verbundenen elektrischen Leiter diesen "Filtereinsatzwert" des elektrischen Widerstandes aufweisen, so dass dementsprechend die Anwesenheit des Filtereinsatzes automatisch ermittelt werden kann. Ist hingegen ein Kurzschluss zwischen den beiden elektrischen Leitern 14 messbar, so befindet sich zu viel Wasser im Kraftstofffilter und die beiden Elektroden 6 sind miteinander durch diesen zu hohen Wasserspiegel kurzgeschlossen.

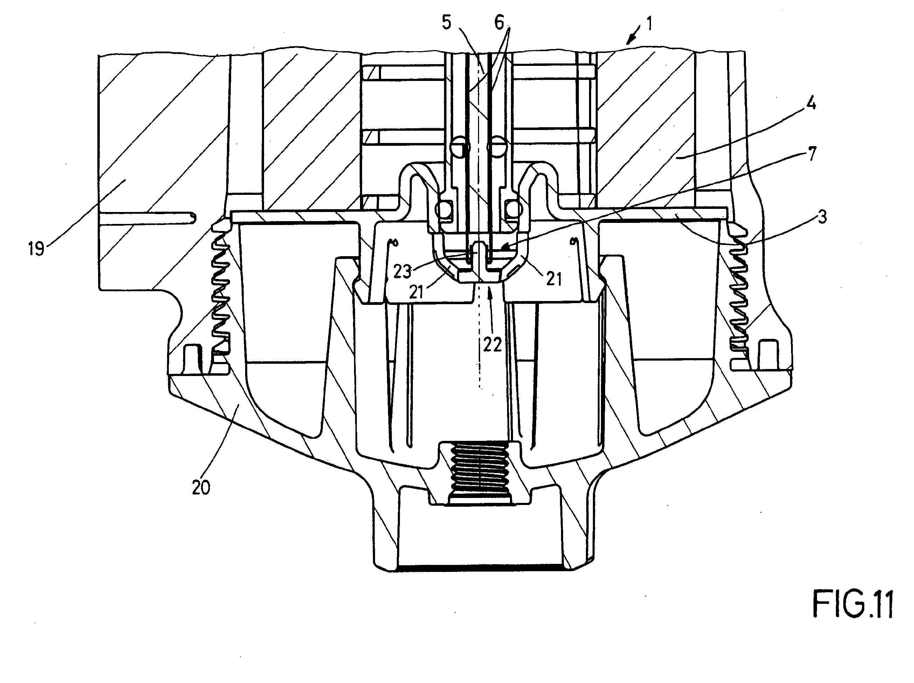

Fig. 11 zeigt einen Ausschnitt eines Filters mit einem Filtergehäuse 19, welches hängend montiert ist, also einen unten angeordneten und das Filtergehäuse 19 verschließenden Schraubdeckel 20 aufweist. Der Schraubdeckel 20 stößt mit seiner umlaufenden, das Gewinde tragenden Wandung gegen die untere Endscheibe 3 des Filtereinsatzes 1 und hält diesen in seiner vorgegebenen Stellung.

Am Stutzen 5 verlaufen zwei Elektroden 6 nach unten und bilden mit ihren unteren Enden den Wasserstandssensor 7. Wenn sich bei dem dargestellten Ausführungsbeispiel Wasser aufgrund seines höheren spezifischen Gewichtes im unteren Bereich des Filtergehäuses 19, insbesondere im Bereich des Schraubdeckels 20, sammelt und der Pegelstand dieses Wassers eine entsprechende Höhe erreicht, so kann das Wasser durch Durchbrechungen 21 hindurchtreten, die in einer nach unten ragenden Kuppe 22 vorgesehen sind, wobei diese Kuppe 22 von der unteren Endscheibe 3 ausgebildet wird. Die Kuppe 22 weist einen zentralen Stift 23 auf, der sich zwischen die beiden Elektroden 6 des Wasserstandssensors 7 erstreckt und somit einen Kurzschluss dieser beiden Elektroden 6 vermeidet. Der Kurzschluss erfolgt vielmehr bei entsprechend hohem Wasserstand durch das im Filtergehäuse 19 befindliche Wasser, so dass in diesem Fall der Wasserstandssensor 7 alarmiert.

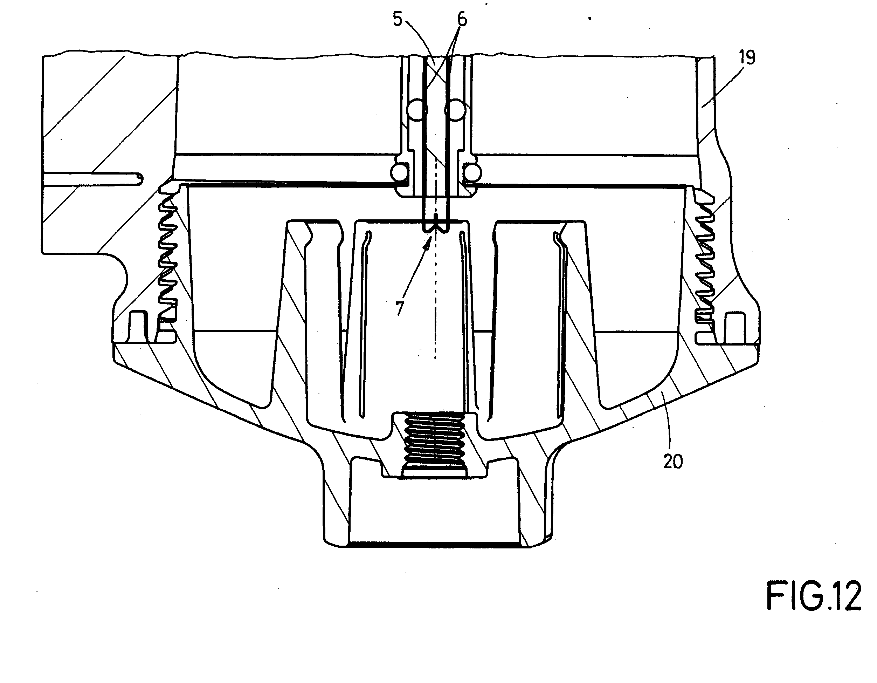

Fig. 12 zeigt das gleiche Ausführungsbeispiel wie Fig. 11, allerdings in einem Zustand, bei dem das Filtergehäuse 19 mit dem Schraubdeckel 20 verschlossen ist, ohne dass ein Filtereinsatz in das Filtergehäuse 19 eingesetzt worden wäre. Die beiden Elektroden 6 bestehen aus federelastischen Drähten bzw. federelastischen Blechstreifen, die an ihrem freien Ende jeweils etwa J-förmig umgebogen sind. Werden diese freien Enden der Elektroden 6 nicht durch den Stift 23 des Filtereinsatzes 1 auseinander gedrückt, so kontaktieren sie sich und erzeugen einen Kurzschluss des Wasserstandssensors 7, so dass dieselbe Alarmmeldung erzeugt wird wie bei einem unzulässig hohen Wasserstand im Filter.

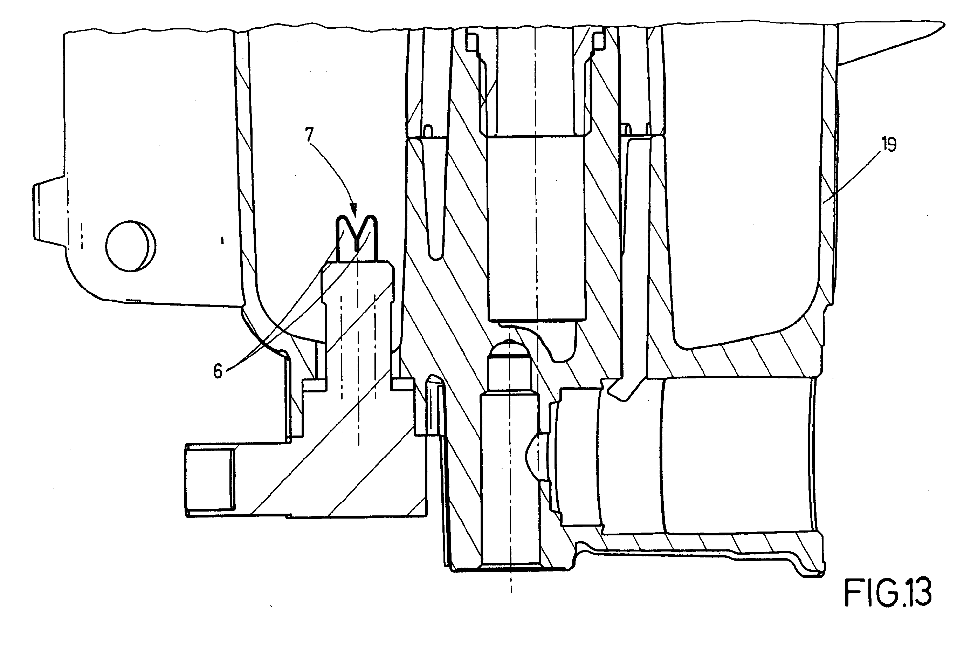

Fig. 13 zeigt ein Ausführungsbeispiel, bei dem ebenfalls der untere Bereich des Filtergehäuses 19 in einem Längsschnitt dargestellt ist. Allerdings ist dieser betreffende Filter stehend montiert, weist also einen Schraubdeckel am oberen Bereich des Filters 19 auf, so dass dieser Schraubdeckel bei der gewählten Darstellung nicht ersichtlich ist.

Der Wasserstandssensor 7 wird durch zwei Elektroden 6 gebildet, die ähnlich wie beim Ausführungsbeispiel der Fig. 11 und 12 als J-förmig umgebogene Drahtbügel ausgestaltet sind. Bei der Darstellung gemäß Fig. 13 ist das Filtergehäuse 19 ohne eingesetzten Filtereinsatz dargestellt.

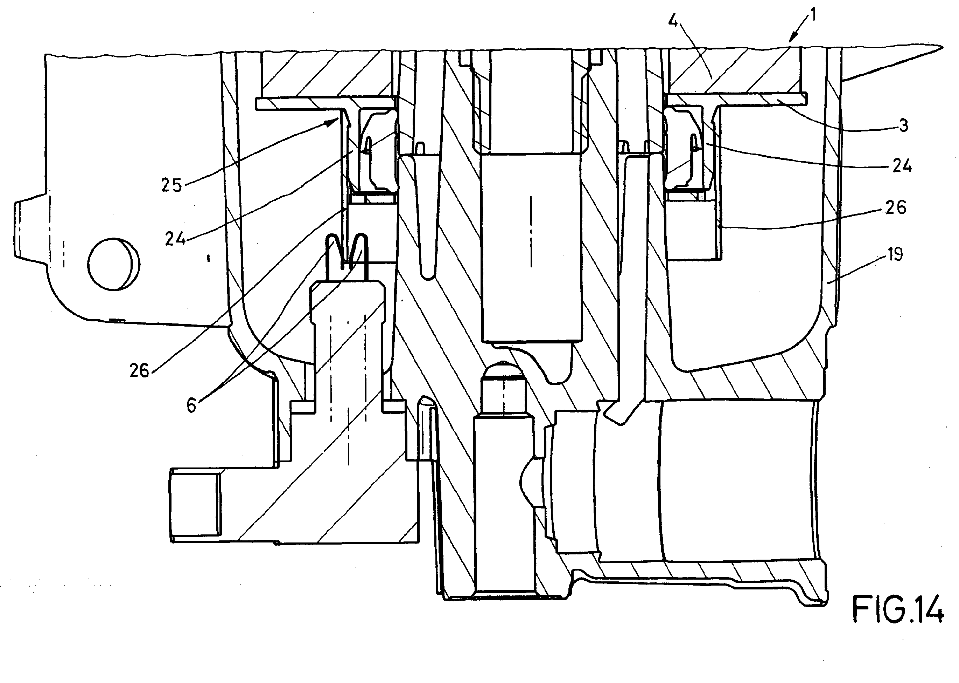

Fig. 14 zeigt demgegenüber das gleiche Ausführungsbeispiel mit eingesetztem Filtereinsatz 1: Die untere Endscheibe 3 des Filtereinsatzes 1 bildet einen umlaufenden Kragen 24 aus, der mittels einer Rastkontur 25 einen äußeren Betätigungsring 26 trägt. Dieser Betätigungsring 26 erstreckt sich, wenn der Filtereinsatz 1 ausreichend weit in das Filtergehäuse 19 eingesetzt ist, zwischen die beiden Elektroden 6 des Wasserstandssensors 7 und verhindert deren Kurzschluss, solange kein entsprechend hoher Wasserstand im Filtergehäuse vorliegt.

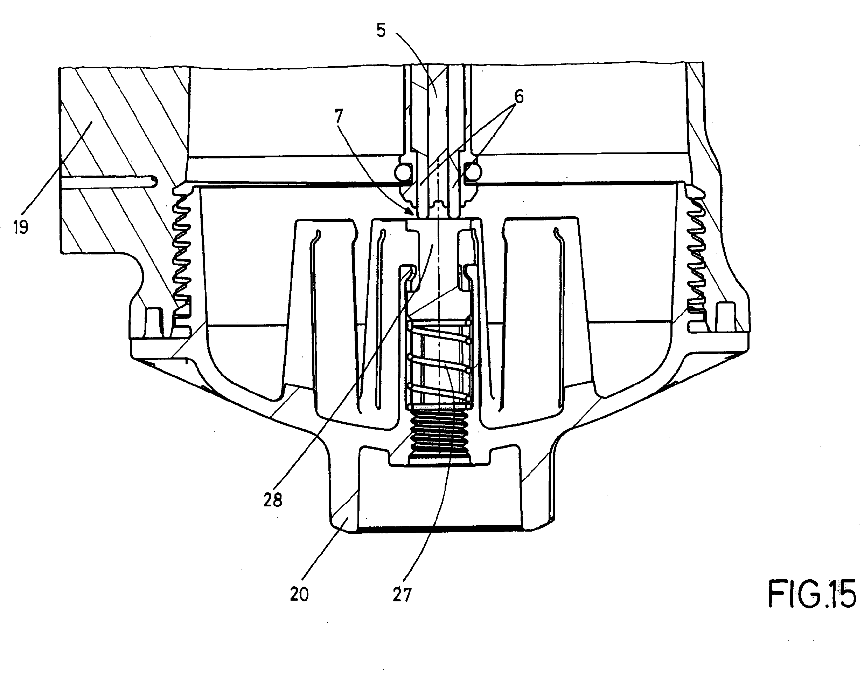

Fig. 15 zeigt ein weiteres Ausführungsbeispiel eines hängend angeordneten Filters: Wie in den Fig. 11 und 12 ist dort der Schraubdeckel 20 an dem nach unten offenen Filtergehäuse 19 vorgesehen. Die Elektroden 6 des Wasserstandssensors 7 sind als Stifte ausgestaltet und im Schraubdeckel 20 befindet sich eine Deckelfeder 27, die als Wendelfeder ausgestaltet ist und einen Kontaktkörper 28 trägt. Wenn - wie in Fig. 15 dargestellt - kein Filtereinsatz im Filtergehäuse 19 angeordnet ist, wird der Kontaktkörper 28 durch die Deckelfeder 27 gegen die beiden Enden der Elektroden 6 gedrückt. Zumindest im Bereich dieser Kontaktfläche, mit welcher der Kontaktkörper 28 den beiden Elektroden 6 anliegt, ist der Kontaktkörper 28 leitfähig ausgestaltet, so dass er die beiden Elektroden 6 kurzschließt und eine Signalisierung des Wasserstandssensors 7 bewirkt.

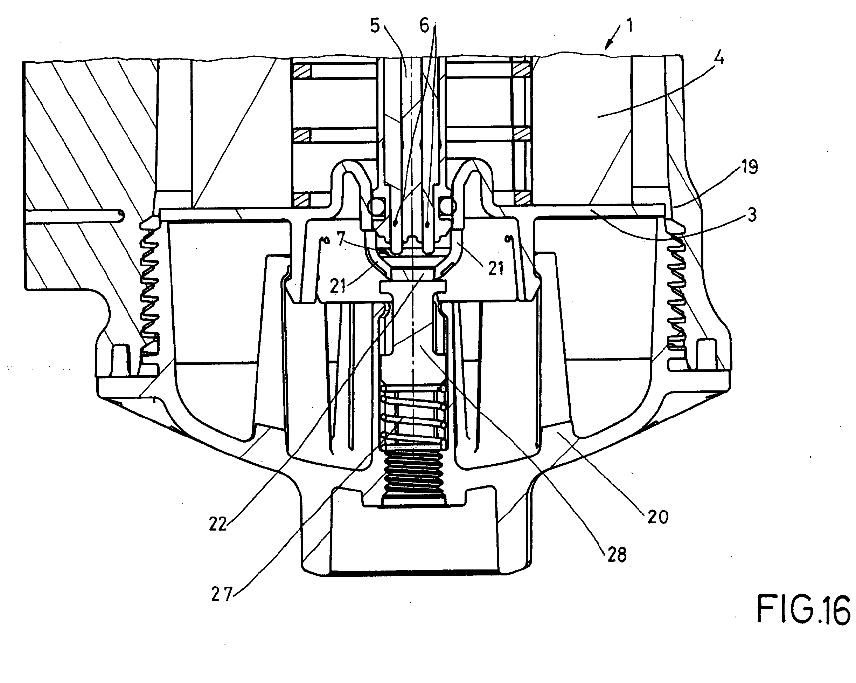

Fig. 16 zeigt das Ausführungsbeispiel der Fig. 15 bei eingesetztem Filtereinsatz 1: Auch bei diesem Ausführungsbeispiel bildet die untere Endscheibe 3 des Filtereinsatzes 4 eine Kuppe 22 mit Durchbrechungen 21 aus. Die Kuppe 22 drängt den Kontaktkörper 28 gegen die Wirkung der Deckelfeder 27 nach unten und hält den Kontaktkörper 28 im Abstand vom Wasserstandssensor 7.

Abweichend von dem dargestellten Ausführungsbeispiel der Fig. 15 und 16 kann vorgesehen sein, auf den Kontaktkörper 28 zu verzichten und stattdessen die Deckelfeder 27 so auszugestalten, dass diese selbst die Kontaktierung der Elektroden 6 bewirkt und diese beiden Elektroden 6 kurzschließt, wenn kein Filtereinsatz 1 montiert ist. Zu diesem Zweck kann die Deckelfeder 27 an ihrem der Kuppe 22 bzw. den Elektroden 6 anliegenden Ende Federwicklungen aufweisen, die gegenüber dem dargestellten, stets gleichen Durchmesser einen sich verringernden Durchmesser aufweisen.

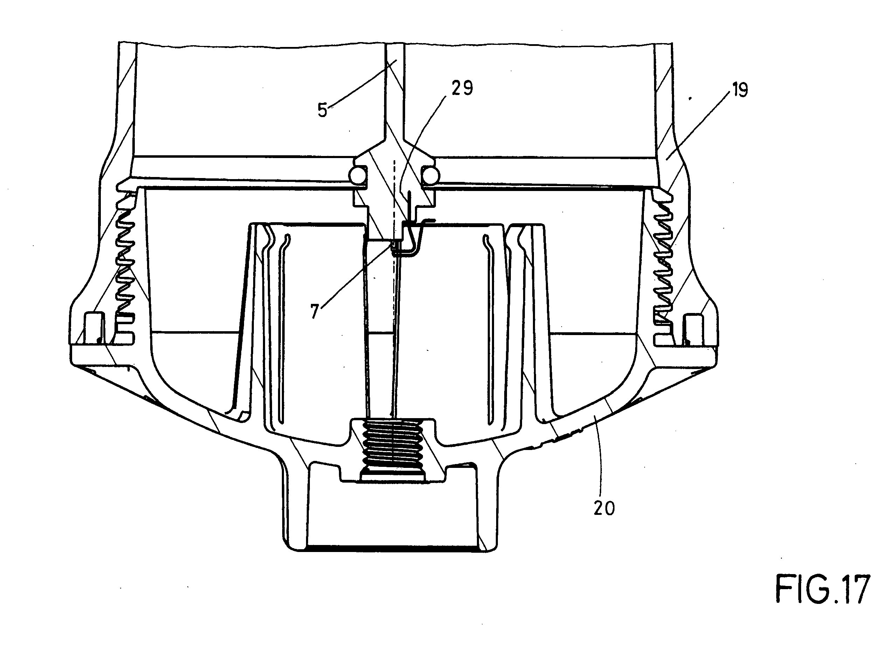

Bei dem Ausführungsbeispiel der Fig. 17 - 20 ist wieder ein hängend montierter Filter mit unterem Schraubdeckel 20 vorgesehen. Der Stutzen 5 weist an seinem unteren Ende einen stiftartig ausgestalteten Wasserstandssensor 7 auf sowie einen federelastischen Kontaktdraht 29, der mit einem Ende im Stutzen 25 festgelegt ist und ein zweites, frei im Raum bewegliches Ende aufweist. Der Kontaktdraht 29 ist dabei so gebogen, dass er, wie aus Fig. 17 ersichtlich, dem Wasserstandssensor 7 anliegt und einen Kurzschluss von dessen Elektroden, also eine Alarmierung des Wasserstandssensors 7 bewirkt, wenn sich kein Filtereinsatz im Filtergehäuse 19 befindet.

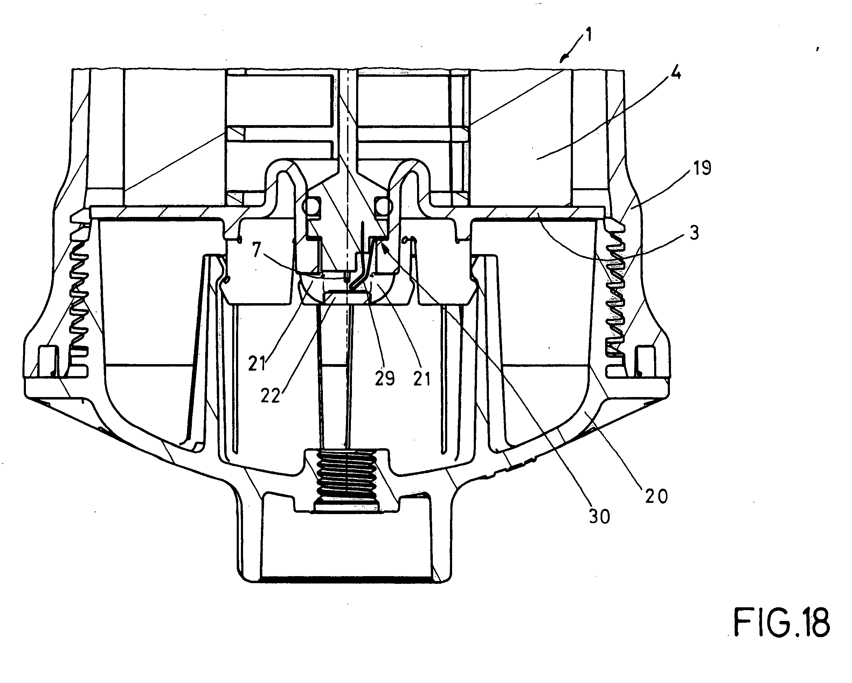

Fig. 18 zeigt im Vergleich dazu die Situation, wenn sich ein Filtereinsatz 1 im Filtergehäuse 19 befindet. Auch bei diesem Ausführungsbeispiel bildet die untere Endscheibe des Filtereinsatzes 1 eine Kuppe 22 aus, die mit Durchbrechungen 21 versehen ist. Zudem bildet die Kuppe 22 einen nach innen ragenden, umlaufenden Vorsprung 30 aus, mit welchem sie dem frei im Raum beweglichen Ende des Kontaktdrahtes 29 anliegt. Dadurch wird der Kontaktdraht 29 derart verbogen, dass er in Abstand zum Wasserstandssensor 7 gerät.

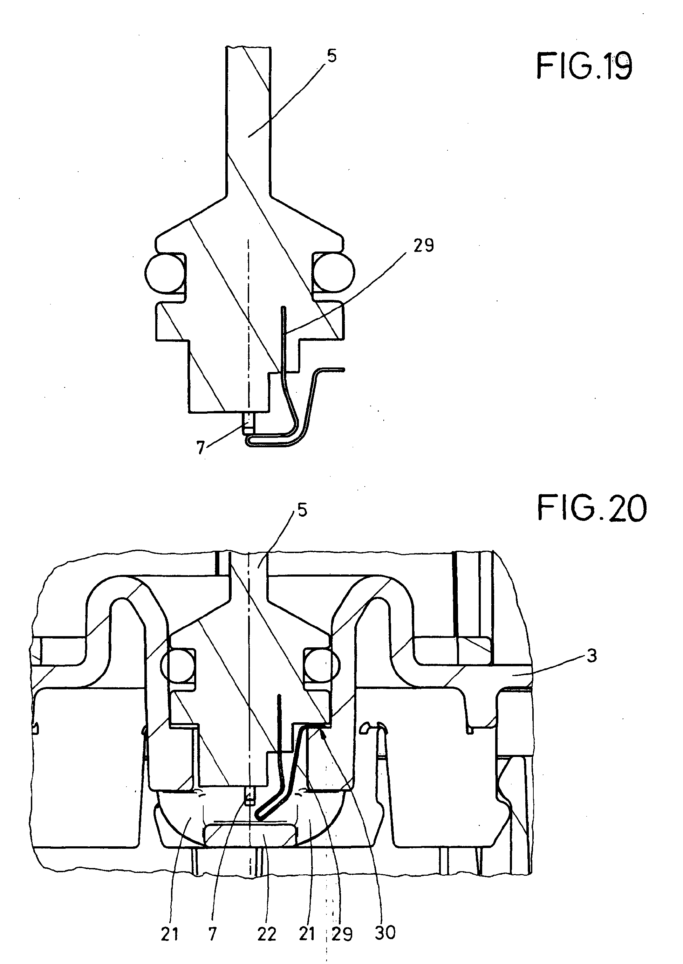

Fig. 19 zeigt die Situation der Fig. 17 im Bereich des Wasserstandssensors 7 in vergrößertem Maßstab: Der Kontaktdraht 29 ist mit seinem einen Ende im Stutzen 5 festgelegt, während sein anderes, abgewinkeltes Ende unbelastet frei im Raum beweglich ist. In seinem mittleren Bereich bildet der Kontaktdraht 29 haarnadelartig einen 180° Bogen aus und in diesem Bereich liegt er dem Wasserstandssensor 7 an.

Fig. 20 zeigt die Situation ähnlich wie Fig. 18, allerdings ebenfalls in vergrößertem Maßstab: Der umlaufende Vorsprung 30 der Kuppe 22 der unteren Endscheibe 3 liegt dem freien, abgewinkelten Ende des Kontaktdrahtes 29 an. Wenn der Filtereinsatz 1 ausreichend weit in das Filtergehäuse 19 eingeführt worden ist, bewirkt die Anlage des Vorsprungs 30 am Kontaktdraht 29 eine Verformung des Kontaktdrahtes, so dass dieser vom Wasserstandssensor 7 weggebogen wird in seine vom Wasserstandssensor 7 beabstandete, aus den Fig. 18 und 20 ersichtliche Stellung.

## Patentansprüche

1. Kraftstofffilter einer Brennkraftmaschine,
mit einem Gehäuse,
einem in dem Gehäuse auswechselbar angeordneten Filtereinsatz (1),
und wenigstens einem ersten elektrischen Leiter (14), der mit einer Schaltung verbindbar ist,
wobei der erste elektrische Leiter (14) in Abhängigkeit davon, ob sich der Filtereinsatz (1) innerhalb oder außerhalb des Kraftstofffilters befindet, unterschiedliche elektrische Widerstands- und / oder Kapazitätswerte aufweist,
wobei der erste elektrische Leiter (14) mit einem im Kraftstofffilter vorgesehenen Sensor verbunden ist, wenn sich der Filtereinsatz (1) innerhalb des Kraftstofffilters befindet, **gekennzeichnet durch**
einen Wassersammeiraum,
und einen Wasserstandssensor (7),
wobei der Wasserstandssensor (7) den ersten elektrischen Leiter und einen zweiten elektrischen Leiter (14) aufweist, und die beiden elektrischen Leiter bei entsprechend hohem Wasserstand durch das Wasser elektrisch miteinander verbindbar sind,
und **durch** ein Schaltelement, welches zwischen einer Kontaktstellung und einer Unterbrechungsstellung beweglich ist,
wobei das Schaltelement in seiner Kontaktstellung Kontakt mit den beiden Leitern (14) hat,
der Kontakt des Schaltelementes mit zumindest einem der beiden Leiter (14) unterbrochen ist, wenn sich das Schaltelement in seiner Unterbrechungsstellung befindet, und der zwischen den beiden Leitern (14) herrschende elektrische Widerstand einen ersten Wert aufweist, wenn sich das Schaltelement in seiner Kontaktstellung befindet, und einen zweiten, von dem ersten Wert unterschiedlichen Wert aufweist, wenn sich das Schaltelement in seiner Unterbrechungsstellung befindet.

2. Kraftstofffilter nach Anspruch 1,
**dadurch gekennzeichnet,**
**dass** die beiden Leiter (14) des Wasserstandssensors (7) einander anliegen, wenn sich der Filtereinsatz (1) außerhalb des Kraftstofffilters befindet,
und das Schaltelement als elektrisches Trennelement ausgestaltet ist,
welches in den Kraftstofffilter und zwischen die beiden Leiter (14), die Leiter (14) in seiner Kontaktstellung voneinander trennend, einsetzbar ist.

3. Kraftstofffilter nach Anspruch 1,
**dadurch gekennzeichnet,**
**dass** die beiden Leiter (14) des Wasserstandssensors (7) voneinander getrennt sind, wenn sich der Filtereinsatz (1) außerhalb des Kraftstofffilters befindet,
und das Schaltelement als elektrisches Verbindungselement ausgestaltet ist,
welches in den Kraftstofffilter und die beiden Leiter (14) in seiner Kontaktstellung miteinander elektrisch verbindend einsetzbar ist.

4. Kraftstofffilter nach einem der vorhergehenden Ansprüche,
**dadurch gekennzeichnet,**
**dass** das Schaltelement mittels des Filtereinsatzes (1) betätigbar ist, derart, dass es in seine Kontaktstellung bewegt wird, wenn der Filtereinsatz (1) in das Gehäuse des Kraftstofffilters eingesetzt wird.

5. Kraftstofffilter nach Anspruch 4,
**dadurch gekennzeichnet,**
**dass** das Schaltelement in seiner vorgesehenen Einbaulage einer Krafteinwirkung folgend in seine Kontaktstellung gedrängt ist, wenn der Filtereinsatz (1) aus dem Gehäuse des Kraftstofffilters entfernt ist.

6. Kraftstofiffilter nach Anspruch 4 oder 5,
**dadurch gekennzeichnet,**
**dass** das Schaltelement mittels der Schwerkraft in seine Kontaktstellung gedrängt ist.

7. Kraftstofffilter nach Anspruch 4 oder 5,
**dadurch gekennzeichnet,**
**dass** das Schaltelement mittels einer Feder in seine Kontaktstellung gedrängt ist.

8. Kraftstofffilter nach einem der Ansprüche 4 bis 7,
**dadurch gekennzeichnet,**
**dass** das Schaltelement gemeinsam mit dem Filtereinsatz (1) in das Gehäuse einsetzbar ist.

9. Kraftstofffilter nach einem der Ansprüche 4 bis 8,
**dadurch gekennzeichnet,**
**dass** das Schaltelement als Teil des Filtereinsatzes (1) ausgestaltet ist.

10. Kraftstofiffilter nach Anspruch 1,
**dadurch gekennzeichnet,**
**dass** das Schaltelement einen definierten elektrischen Widerstand aufweist, der sich von dem Widerstand des die beiden Leiter (14) des Wasserstandssensors (7) verbindenden Wassers unterscheidet.

11. Kraftstofffilter nach einem der vorhergehenden Ansprüche,
**dadurch gekennzeichnet,**
**dass** das Schaltelement als separates Bauteil ausgestaltet ist.

12. Verfahren zum Wechseln eines Filtereinsatzes eines Kraftstofffilters, wobei
■ ein den Filtereinsatz aufnehmendes Gehäuse geöffnet,
■ ein verbrauchter Filtereinsatz aus dem Gehäuse entnommen,
■ ein unverbrauchter Filtereinsatz in das Gehäuse eingesetzt
■ und das Gehäuse wieder verschlossen wird,
**dadurch gekennzeichnet,**
**dass** beim Einsetzen des Filtereinsatzes (1) ein Schaltelement in dem Kraftstofffilter bewegt wird, derart, dass das Schaltelement aufgrund seiner Bewegung den elektrischen Widerstand zwischen zwei elektrischen Leitern (14) eines Wasserstandssensors (7) ändert.

13. Verfahren nach Anspruch 12,
**dadurch gekennzeichnet,**
**dass** zwei voneinander getrennte Leiter (14) eines Wasserstandssensors (7) miteinander verbunden werden, indem das Schaltelement beim Einsetzen des Filtereinsatzes (1) bewegt wird und die beiden zunächst voneinander getrennten Leiter (14) miteinander verbindet.

14. Verfahren nach Anspruch 12,
**dadurch gekennzeichnet,**
**dass** zwei miteinander verbundene Leiter (14) eines Wasserstandssensors (7) voneinander getrennt werden, indem ein Schaltelement beim Einsetzen des Filtereinsatzes (1) bewegt wird und die beiden zunächst miteinander verbundenen Leiter (14) voneinander trennt.

15. Verfahren nach einem der Ansprüche 12 bis 14,
**dadurch gekennzeichnet,**
**dass** das Schaltelement einen definierten elektrischen Widerstand aufweist.

16. Diagnoseverfahren zur Überprüfung eines Kraftstofffilters, wobei der Kraftstofffilter einen auswechselbaren Filtereinsatz aufweist,
wobei der elektrische Widerstand zwischen zwei im Kraftstofffilter angeordneten elektrischen Leitern verändert wird in Abhängigkeit davon, ob diese beiden Leiter durch im Kraftstofffilter befindliches Wasser elektrisch miteinander verbunden werden,
und wobei der zwischen den beiden Leitern herrschende elektrische Widerstand automatisch ermittelt wird,
wobei ein erster, sogenannter "Kurzschlusswert" des elektrischen Widerstands herrscht, wenn die beiden Leiter durch im Kraftstofffilter befindliches Wasser elektrisch miteinander verbunden sind, und ein zweiter, sogenannter "I-solationswert" des elektrischen Widerstands herrscht, wenn die beiden Leiter elektrisch voneinander getrennt sind,
und wobei eine elektronische Schaltung zumindest dann, wenn der "Kurzschlusswert" ermittelt wird, ein Schaltsignal erzeugt,
**dadurch gekennzeichnet,**
**dass** der elektrische Widerstand zwischen den beiden Leitern (14) automatisch verändert wird, wenn der Filtereinsatz (1) aus dem Kraftstofffilter entfernt wird,
und **dass** der elektrische Widerstand zwischen den beiden Leitern (14) automatisch erneut verändert wird, wenn ein Filtereinsatz (1) in den Kraftstofffilter eingesetzt wird.

17. Diagnoseverfahren nach Anspruch 16,
**dadurch gekennzeichnet,**
**dass** durch die Entfernung des Filtereinsatz (1) aus dem Kraftstofffilter der elektrische Widerstand zwischen den beiden Leitern (14) automatisch auf etwa den "Kurzschlusswert" verändert wird.

18. Diagnoseverfahren nach Anspruch 16,
**dadurch gekennzeichnet,**
**dass** durch das Einsetzen des Filtereinsatz (1) in den Kraftstofffilter die beiden Leiter (14) mittels eines definierten elektrischen Widerstandes miteinander verbunden werden, wobei der Wert dieses elektrischen Widerstands, der als "Filtereinsatzwert" bezeichnet ist, sowohl von dem "Kurzschlusswert" als auch von dem "Isolationswert" verschieden ist.

19. Diagnoseverfahren nach einem der Ansprüche 16 bis 18,
**dadurch gekennzeichnet,**
**dass** ein Warnsignal ausgelöst wird, wenn der "Kurzschlusswert" ermittelt wird.

20. Diagnoseverfahren nach einem der Ansprüche 16 bis 19,
**dadurch gekennzeichnet,**
**dass** ein Schaltsignal in Form eines Sperrsignals an eine elektronische Motorsteuerung übermittelt wird, wenn der "Kurzschlusswert" ermittelt wird, und dass die Motorsteuerung einen Start des Motors verhindert, wenn das Sperrsignal vorliegt.

21. Diagnoseverfahren nach einem der Ansprüche 18 bis 20,
**dadurch gekennzeichnet,**
**dass** die elektronische Schaltung auf einen bestimmten "Filtereinsatzwert" abgestimmt ist, derart, dass das Warnsignal oder das Sperrsignal ausgelöst wird, wenn ein von dem "Filtereinsatzwert" abweichender Wert des elektrischen Widerstandes zwischen den beiden Leitern (14) ermittelt wird.

## Claims

1. Fuel filter for an internal combustion engine, having a housing, a filter element (1) exchangeably disposed in the housing and one or more first electrical conductors (14) which is or are connected to an electrical circuit, where the first electrical conductor (14) sets up different electrical resistances and/or capacitances depending on whether the filter element (1) is located inside or outside the fuel filter and where, when the filter element (1) is located inside the fuel filter, the first electrical conductor (14) is connected to a sensor provided for inside the fuel filter,
**characterised by** a water collection chamber and a water level sensor (7), where the water level sensor (7) incorporates the first electrical conductor and a second electrical conductor (14) and where at an appropriately high water level the two electrical conductors can be electrically connected to each other by the water and **characterised by** a switching element which can be moved between a contact position and a disconnecting position,
where in its contact position the switching element is in contact with the two elecrical conductors (14), contact between the switching element and one or more of the two electrical conductors (14) is disconnected when the switching element is in its disconnecting position, and the electrical resistance prevailing between the two electrical conductors (14) shows a first value when the switching element is in its contact position and, when the switching element is in its disconnecting position, a second value that differs from the first value.

2. Fuel filter in accordance with claim 1, **characterised in that** the two electrical conductors (14) of the water level sensor (7) are connected to each other when the filter element (1) is located outside the fuel filter and **in that** the switching element is constructed as an electrical separating element which can be inserted into the fuel filter and between the two electrical conductors (14) and in its contact position separates the electrical conductors (14) from each other.

3. Fuel filter in accordance with claim 1, **characterised in that** the two electrical conductors (14) of the water level sensor (7) are separated from each other when the filter element (1) is located outside the fuel filter and **in that** the switching element is constructed as an electrical connecting element which can be inserted into the fuel filter and between the two electrical conductors (14) and in its contact position connects the two electrical conductors to each other electrically.

4. Fuel filter in accordance with any one of the foregoing claims, **characterised in that** the switching element can be so operated by means of the filter element (1) that it is moved into its contact position when the filter element (1) is inserted into the housing of the fuel filter.

5. Fuel filter in accordance with claim 4, **characterised in that** the switching element in its intended fitting position is forced into its contact position by a force acting on it when the filter element (1) is removed from the housing of the fuel filter.

6. Fuel filter in accordance with claim 4 or 5, **characterised in that** the switching element is forced into its contact position by the force of gravity.

7. Fuel filter in accordance with claim 4 or 5, **characterised in that** the switching element is forced into its contact position by means of a spring.

8. Fuel filter in accordance with any one of claims 4 to 7, **characterised in that** the switching element can be inserted into the housing together with the filter element (1).

9. Fuel filter in accordance with any one of claims 4 to 8, **characterised in that** the switching element is constructed as part of the filter element (1).

10. Fuel filter in accordance with claim 1, **characterised in that** the switching element sets up a specified electrical resistance that differs from the resistance of the water connecting the two electrical conductors (14) of the water level sensor (7).

11. Fuel filter in accordance with any one of the foregoing claims, **characterised in that** the switching element is constructed as a separate component part.

12. Method of changing a filter element of a fuel filter, where
■ a housing to receive the filter element is opened,
■ a used filter element is removed from the housing,
■ an unused filter element is inserted into the housing
■ and the housing is closed again,
**characterised in that**, while the filter element (1) is being inserted, a switching element is so moved in the fuel filter that through its movement the switching element changes the electrical resistance between two electrical conductors (14) of a water level sensor (7).

13. Method in accordance with claim 12, **characterised in that** two electrical conductors (14) of a water level sensor (7) which are separated from each other are connected to each other if, while the filter element (1) is being inserted, the switching element is moved to bring together the two electrical conductors (14) which were initially separated from each other.

14. Method in accordance with claim 12, **characterised in that** two electrical conductors (14) of a water level sensor (7) which are connected to each other are separated from each other if, while the filter element (1) is being inserted, a switching element is moved and separates from each other the two electrical conductors (14) which were initially connected to each other.

15. Method in accordance with any one of claims 12 to 14, **characterised in that** the switching element incorporates a specified electrical resistance.

16. Method of diagnosis for inspecting a fuel filter, where the fuel filter incorporates an exchangeable filter element, where the electrical resistance between two electrical conductors disposed in the fuel filter is changed depending on whether the said two electrical conductors are connected to each other electrically by water present in the fuel filter, and where the electrical resistance prevailing between the two electrical conductors is determined automatically,
where a first, so-called "short-circuit value" of the electrical resistance prevails when the two electrical conductors are connected to each other by water present in the fuel filter and a second, so-called "isolation value" of the electrical resistance prevails when the two electrical conductors are electrically separated from each other, and where an electronic circuit generates a switching signal at least when the "short-circuit value" is determined,
**characterised in that** the electrical resistance between the two electrical conductors (14) is automatically changed when the filter element (1) is removed from the fuel filter and **in that** the electrical resistance between the two conductors (14) is automatically changed again when a filter element (1) is inserted into the fuel filter.

17. Method of diagnosis in accordance with claim 16, **characterised in that** by removal of the filter element (1) from the fuel filter the electrical resistance between the two electrical conductors (14) is automatically changed to approximately the "short-circuit value".

18. Method of diagnosis in accordance with claim 16, **characterised in that** by insertion of the filter element (1) into the fuel filter the two electrical conductors (14) are connected to each other by means of a specified electrical resistance, where the value of this electrical resistance, which is designated the "filter element value", differs from both the "short-circuit value" and the "isolation value".

19. Method of diagnosis in accordance with any one of claims 16 to 18, **characterised in that** a warning signal is triggered when the "short-circuit value" is determined.

20. Method of diagnosis in accordance with any one of claims 16 to 19, **characterised in that**, when the "short-circuit value" is determined, a control signal in the form of a block signal is transmitted to an electronic motor control means, and **in that** the motor control means prevents the motor from being started when the block signal is sent.

21. Method of diagnosis in accordance with any one of claims 18 to 20, **characterised in that** the electronic circuit is set to a specific "filter element value" so that the warning signal or the block signal is triggered when a value of the electrical resistance between the two electrical conductors (14) which deviates from the "filter element value" is determined.

## Revendications

1. Filtre à carburant d'un moteur à combustion interne, comprenant un carter, une cartouche filtrante (1) interchangeable installée dans le carter et au moins un premier conducteur (14) électrique qu'il est possible de relier à un circuit, sachant que le premier conducteur électrique (14) présente des valeurs de résistance et de capacités différentes selon que la cartouche filtrante (1) se trouve à l'intérieur ou à l'extérieur du filtre à carburant, sachant que le premier conducteur électrique (14) est relié à un capteur prévu dans le filtre à carburant lorsque la cartouche filtrante (1) se trouve à l'intérieur du filtre à carburant,
**gekennzeichnet durch** einen Wassersammelraum, und einen Wasserstandssensor (7), wobei der Wasserstandssensor (7) den ersten elektrischen Leiter und einen zweiten elektrischen Leiter (14) aufweist, und die beiden elektrischen Leiter bei entsprechend hohem Wasserstand **durch** das Wasser elektrisch miteinander verbindbar sind, und **durch** ein Schaltelement, welches zwischen einer Kontaktstellung und einer Unterbrechungsstellung beweglich ist,
sachant que l'élément commutateur, lorsqu'il se trouve sur sa position de contact, est en contact avec les deux conducteurs (14), que le contact de l'élément commutateur avec au moins l'un des deux conducteurs (14) est interrompu lorsque l'élément commutateur se trouve sur sa position d'interruption, et que la résistance électrique régnant entre les deux conducteurs (14) présente une première valeur lorsque l'élément commutateur se trouve sur sa position de contact, et une deuxième valeur différente de la première lorsque l'élément commutateur se trouve sur sa position d'interruption.

2. Filtre à carburant selon la revendication 1, **caractérisé en ce que** les deux conducteurs (14) du capteur (7) de niveau d'eau appliquent l'un contre l'autre lorsque la cartouche filtrante (1) se trouve hors du filtre à carburant, et que l'élément commutateur est configuré comme élément de séparation électrique utilisable dans le filtre à carburant et entre les deux conducteurs (14) et qu'il sépare ces conducteurs (14) l'un de l'autre lorsque sur sa position de contact.

3. Filtre à carburant selon la revendication 1, **caractérisé en ce que** les deux conducteurs (14) du capteur de niveau d'eau (7) sont séparés l'un de l'autre lorsque la cartouche filtrante (1) se trouve hors du filtre à carburant, et que l'élément commutateur est configuré comme élément de liaison électrique utilisable dans le filtre à carburant, et que les deux conducteurs (14) peuvent être reliés électriquement entre eux lorsqu'il se trouve sur sa position de contact.

4. Filtre à carburant selon l'une des revendications précédentes, **caractérisé en ce que** l'élément commutateur est actionnable au moyen de la cartouche filtrante (1), de sorte à être amené sur sa position de contact lorsque la cartouche filtrante (1) est introduite dans le carter du filtre à carburant.

5. Filtre à carburant selon la revendication 4, **caractérisé en ce que** l'élément commutateur se trouvant dans sa position d'incorporation prévue est forcé de se rendre sur sa position de contact lorsque la cartouche filtrante (1) est retirée du carter du filtre à carburant.

6. Filtre à carburant selon la revendication 4 ou 5, **caractérisé en ce que** l'élément commutateur est forcé de se rendre sur sa position de contact sous l'action de la gravité.

7. Filtre à carburant selon la revendication 4 ou 5, **caractérisé en ce que** l'élément commutateur est forcé de se rendre sur sa position de contact sous l'action d'un ressort.

8. Filtre à carburant selon l'une des revendications 4 à 7, **caractérisé en ce que** l'élément commutateur peut être introduit dans le carter conjointement à la cartouche filtrante (1)

9. Filtre à carburant selon l'une des revendications 4 à 8, **caractérisé en ce que** l'élément commutateur est configuré comme partie de la cartouche filtrante (1).

10. Filtre à carburant selon la revendication 1, **caractérisé en ce que** l'élément commutateur présente une résistance électrique définie qui diffère de la résistance de l'eau qui relie les deux conducteurs (14) du capteur (7) de niveau d'eau.

11. Filtre à carburant selon l'une des revendications précédentes, **caractérisé en ce que** l'élément commutateur est configuré comme composant séparé.

12. Procédé pour changer la cartouche filtrante d'un filtre à carburant, consistant à
■ ouvrir un carter recevant la cartouche filtrante,
■ saisir une cartouche filtrante usagée pour la retirer du carter,
■ mettre en place une cartouche filtrante non usagée dans le carter
■ puis à refermer le carter,
**caractérisé en ce que** lors de la mise en place de la cartouche filtrante (1), un élément commutateur est déplacé dans le filtre à carburant de sorte que l'élément commutateur modifie, en raison de son mouvement, la résistance électrique entre deux conducteurs électriques (14) d'un capteur (7) de niveau d'eau.

13. Procédé selon la revendication 12, **caractérisé en ce que** deux conducteurs (14) d'un capteur (7) de niveau d'eau séparés l'un de l'autre sont reliés entre eux du fait que, lors de la mise en place de la cartouche filtrante (1), l'élément commutateur est déplacé et qu'il relie les deux conducteurs (14) qui étaient initialement séparés l'un de l'autre.

14. Procédé selon la revendication 12, **caractérisé en ce que** deux conducteurs (14) d'un capteur (7) de niveau d'eau reliés entre eux sont séparés l'un de l'autre lorsqu'un élément commutateur est déplacé pendant l'introduction de la cartouche filtrante (1) et qu'il sépare l'un de l'autre les deux conducteurs (14) qui étaient initialement reliés entre eux.

15. Procédé selon l'une des revendications 12 à 14, **caractérisé en ce que** l'élément commutateur présente une résistance électrique définie.

16. Procédé de diagnostic pour vérifier un filtre à carburant, sachant que le filtre à carburant présente une cartouche filtrante interchangeable, sachant que la résistance électrique entre deux conducteurs agencés dans le filtre à carburant est modifiée selon que ces deux conducteurs sont reliés électriquement ou non par l'eau présente dans le filtre à carburant, et sachant que la résistance électrique régnant entre les deux conducteurs est automatiquement déterminée,
sachant qu'il y a présence d'une première valeur dite « valeur de court-circuit », prise par la résistance électrique, lorsque les deux conducteurs sont reliés électriquement entre eux par l'eau présente dans le filtre à carburant, et sachant qu'il y a présence d'une deuxième valeur dite « valeur d'isolation » prise par la résistance électrique lorsque les deux conducteurs sont séparés électriquement l'un de l'autre, et sachant qu'un circuit électronique génère un signal de commutation au moins lorsque la « valeur de court-circuit » est déterminée.
**caractérisé en ce que** la résistance électrique entre les deux conducteurs (14) change automatiquement lorsque la cartouche filtrante (1) est retirée du filtre à carburant, et que la résistance électrique entre les deux conducteurs (14) change à nouveau automatiquement lorsqu'une cartouche filtrante (1) est mise en place dans le filtre à carburant.

17. Procédé de diagnostic selon la revendication 16, **caractérisé en ce que** l'enlèvement de la cartouche filtrante (1) hors du filtre à carburant modifie automatiquement la résistance électrique entre les deux conducteurs (14) pour lui faire prendre approximativement la « valeur de court-circuit ».

18. Procédé de diagnostic selon la revendication 16, **caractérisé en ce que** du fait de la mise en place de l'insert filtrant (1) dans le filtre à carburant, les deux conducteurs (14) sont reliés entre eux au moyen d'une résistance électrique définie, sachant que la valeur prise par cette résistance électrique, dite « valeur de la cartouche filtrante », est différente aussi bien de la « valeur de court-circuit » que de la « valeur d'isolation ».

19. Procédé de diagnostic selon l'une des revendications 16 à 18, **caractérisé en ce qu'**un signal d'avertissement est déclenché lorsque la « valeur de court-circuit » est déterminée.

20. Procédé de diagnostic selon l'une des revendications 16 à 19, **caractérisé en ce qu'**un signal de commutation sous forme de signal de blocage est transmis à une commande moteur électronique lorsque la « valeur de court-circuit » est déterminée, et **en ce que** la commande moteur empêche le moteur de démarrer en présence d'un signal de barrage.

21. Procédé de diagnostic selon l'une des revendications 18 à 20, **caractérisé en ce que** le circuit électronique est ajusté sur une « valeur de cartouche filtrante » définie, de sorte que le signal d'avertissement ou le signal de barrage est déclenché lorsqu'est déterminée, entre les deux conducteurs (14), une valeur de la résistance électrique différente de la « valeur de cartouche filtrante ».
